# EUROPÄISCHE PATENTSCHRIFT

(11) **EP 3 441 630 B1**
(45) Veröffentlichungstag und Bekanntmachung des Hinweises auf die Patenterteilung: **17.03.2021**
(21) Anmeldenummer: 18187906.5
(22) Anmeldetag: 08.08.2018
(51) Int. Cl.: F16B 25/00

(54) **BEFESTIGUNGSELEMENT MIT SCHAFT AUS ANEINANDER ANGESTÜCKTEN ABSCHNITTEN UNTERSCHIEDLICHER DURCHMESSER**
FASTENING ELEMENT WITH SHAFT MADE OF CONNECTED SECTIONS HAVING DIFFERENT DIAMETERS TO EACH OTHER
ÉLÉMENT DE FIXATION POURVU DE TIGE DE SECTIONS RAPPORTÉES LES UNES AUX AUTRES DE DIFFÉRENTS DIAMÈTRES

(30) Priorität: 08.08.2017 DE 102017118013
(43) Veröffentlichungstag der Anmeldung: 13.02.2019
(73) Patentinhaber: Adolf Würth GmbH & Co. KG, 74653 Künzelsau (DE); Würth International AG, 7000 Chur (CH)
(72) Erfinder: Küenzlen, Jürgen, 71570 Oppenweiler (DE); Wunderlich, Andreas, 74635 Kupferzell (DE); Wied, Eberhard, 74427 Fichtenberg (DE)
(74) Vertreter: Dilg, Haeusler, Schindelmann Patentanwaltsgesellschaft mbH

(56) Entgegenhaltungen:
- DE-A1-102014 204 598
- DE-U1-202010 010 858
- US-A1- 2002 018 700

## Beschreibung

Die Erfindung betrifft ein Herstellungsverfahren, ein Befestigungselement, ein Montagekit, eine Montageanordnung, ein Verfahren zum Montieren eines Anbauteils an einen Verankerungsgrund und eine Verwendung.

Während für Montagearbeiten, bei denen ein Anbauteil direkten Kontakt mit dem Verankerungsgrund hat, eine große Anzahl von Systemen und Produkten zur Verfügung steht, bereitet die so genannte Abstandsmontage immer wieder Probleme. Teilweise auch im Neubau, gerade aber in der Sanierung, tritt oft der Fall auf, dass der Verankerungsgrund mit einer zusätzlichen Dämmung oder dergleichen versehen werden soll. Bei Montage eines Anbauteils an einen Verankerungsgrund, wobei zwischen diesen die Dämmschicht angeordnet ist, soll die Dämmschicht mittels eines Verankerungselementes überbrückt werden, um die Einleitung von Kräften in den Verankerungsgrund zu ermöglichen. Dabei wird das Anbauteil entsprechend einer Setz- und Montageanweisung des gewählten Verankerungselementes montiert.

Die Firma Würth bietet zum Beispiel zur Montage eines Fensterrahmens an einer Wand die Abstandsmontageschraube Amo III an. Diese stellt eine in der Praxis einfach handhabbare Abstandsmontageschraube dar, mit der es ermöglicht ist, Fenster präzise zu befestigen. Bei der Abstandsmontageschraube Amo III handelt es sich um eine selbst hinterschneidende Schraube, die ohne einen Dübel auskommt und alle angreifenden Lasten mittels Formschluss in den Untergrund einleitet.

Die Firma Würth bot ferner zur Abstandsmontage das dübelbasierte Befestigungssystem F-Anker an. Dieses stellt einen spannungsfreien Abstandsmontage-Anker für die Verbindung zweier räumlich getrennter Elemente nach vorjustiertem Abstand bereit. Bei dem F-Anker schneidet das Kopfgewinde in den Fensterrahmen bzw. die Holzleiste ein und fixiert diese zug- und druckfest auf Abstand zum Verankerungsgrund. Ein Befestigungssystem auf Basis eines F-Ankers erfordert stets den Einsatz eines Dübels. Für die Befestigung in einem Untergrund mit Hohlkammern können herkömmliche Dübel allerdings zu kurz sein.

DE 10 2010 030 281 offenbart ein Montagekit zum beabstandeten Montieren eines Anbauteils an einen Verankerungsgrund, wobei das Montagekit eine Schraube mit einem Gewindeteil und einen Dübel aufweist, wobei die Schraube ausgebildet ist, bei Eindrehen in eine Bohrung in einer Betonwand selbstschneidend ein Gewinde zu bilden, wobei die Schraube eingerichtet ist, durch das Anbauteil hindurch in eine Bohrung in einem als Vollkörper ausgestalteten Verankerungsgrund dübelfrei eingedreht zu werden, und wobei die Schraube eingerichtet ist, durch das Anbauteil hindurch in den Dübel in einer Bohrung in einem als Hohlkörper ausgestalteten Verankerungsgrund eingedreht zu werden.

DE 10 2008 016 866 A1 offenbart ein Verfahren zum Herstellen einer Schraube. Das Verfahren hat Schritte zum Bilden eines Antriebs zum Drehantreiben des Befestigungselements; Bilden eines Schafts mittels separaten Bildens eines Gewindeabschnitts und separaten Bildens eines anderen Abschnitts; und zum Anstücken des Gewindeabschnitts an den anderen Abschnitt an einer Materialschnittstelle. Die Durchmesser des Gewindeabschnitts und des anderen Abschnitts sind gleich groß.

DE 10 2010 030 281 A1 offenbart eine einstückige Schraube, die einen Gewindeabschnitt mit kleinem Durchmesser und einen anderen Abschnitt mit großem Durchmesser aufweist.

US 2002/0018700 A1 offenbart ein Verfahren zum Herstellen eines Befestigungselements. Das Verfahren hat Schritte zum Bilden eines Antriebs zum Drehantreiben des Befestigungselements; Bilden eines Schafts mittels Bildens eines Gewindeabschnitts, der zumindest abschnittsweise mit einem ersten Schaftdurchmesser mit einem darauf angeordneten Gewinde vorgesehen ist; und Bildens eines gewindefreien, anderen Abschnitts, der zumindest abschnittsweise mit einem zweiten Schaftdurchmesser vorgesehen ist, der größer als der erste Schaftdurchmesser ist. Der gewindefreie, andere Abschnitt und der Gewindeabschnitt sind vorn vornhinein einstückig vorgesehen.

DE 25 55 647 A1 offenbart eine zweistückige Bohrschraube, von der ein Abschnitt mit einem Schaft versehen wird und von der ein anderer Abschnitt mit einer zu dem Schaft im Wesentlichen invers geformten Bohrung versehen wird. Beide Abschnitte werden verbunden, indem der Schaft zuerst in die Bohrung eingeführt und dann durch ein separates Lötmittel dort angefügt wird. Wenngleich die beschriebenen Systeme für verschiedene Anwendungen sehr leistungsstark sind, ist die Herstellung eines entsprechenden Befestigungselements relativ aufwändig.

DE 10 2014 204 598 A1 offenbart in der Fig. 1 ein Befestigungselement 10 zum Monieren eines Anbauteils an einem Verankerungsgrund. Z

Es ist eine Aufgabe der vorliegenden Erfindung, ein Befestigungselement, insbesondere für die Abstandsmontage mit geringem Aufwand und hoher Qualität herzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Verfahren zum Herstellen eines Befestigungselements geschaffen, wobei bei dem Verfahren ein Antrieb zum Antreiben, insbesondere zum Drehantreiben, des Befestigungselements gebildet wird und ein Schaft gebildet wird. Der Schaft wird gebildet mittels separaten Bildens eines Gewindeabschnitts der zumindest abschnittsweise mit einem ersten Schaftdurchmesser mit einem darauf angeordneten Gewinde vorgesehen ist, separaten Bildens eines anderen Abschnitts, der zumindest abschnittsweise mit einem zweiten Schaftdurchmesser vorgesehen ist, der größer als der erste Schaftdurchmesser ist, und nachfolgenden Anstückens des Gewindeabschnitts an den anderen Abschnitt an einer Materialschnittstelle.

Gemäß einem anderen Ausführungsbeispiel ist ein Befestigungselement zum Montieren eines Anbauteils an einem Verankerungsgrund bereitgestellt, wobei das Befestigungselement einen Antrieb zum Antreiben (insbesondere zum Drehantreiben) des Befestigungselements und einen Schaft aufweist. Der Schaft weist einen Gewindeabschnitt auf, der zum Befestigen in dem Verankerungsgrund in einem dem Antrieb abgewandten Bereich des Schafts und zumindest abschnittsweise mit einem ersten Schaftdurchmesser mit einem darauf angeordneten Gewinde vorgesehen ist. Der Schaft weist ferner einen anderen Abschnitt auf, der zum Befestigen in dem Anbauteil in einem dem Antrieb zugewandten Bereich des Schafts und zumindest abschnittsweise mit einem zweiten Schaftdurchmesser vorgesehen ist, der größer als der erste Schaftdurchmesser ist. Der Gewindeabschnitt und der andere Abschnitt können aneinander an einer Materialschnittstelle (die insbesondere ein anderes Material aufweisen kann als der Gewindeabschnitt und der andere Abschnitt) angestückt sein.

Gemäß noch einem anderen Ausführungsbeispiel der vorliegenden Erfindung ist ein Montagekit zum Montieren eines Anbauteils an einem Verankerungsgrund bereitgestellt, wobei das Montagekit ein Befestigungselement mit den oben beschriebenen Merkmalen und einen Dübel aufweist, wobei das Befestigungselement eingerichtet ist, durch das Anbauteil hindurch in einen als Vollkörper ausgestalteten Verankerungsgrund dübelfrei eingedreht zu werden, und wobei das Befestigungselement eingerichtet ist, durch das Anbauteil hindurch in den Dübel in einer Bohrung in einem als Hohlkörper ausgestalteten Verankerungsgrund eingedreht zu werden.

Gemäß noch einem anderen Ausführungsbeispiel der vorliegenden Erfindung ist eine Montageanordnung bereitgestellt, die ein Befestigungselement mit den oben beschriebenen Merkmalen, ein Anbauteil und einen Verankerungsgrund aufweist, wobei das Befestigungselement eingerichtet ist, durch das Anbauteil hindurch in den Verankerungsgrund eingebracht (insbesondere eingedreht) zu werden, so dass zumindest ein Teil des Gewindeabschnitts in dem Verankerungsgrund befestigt ist (insbesondere direkt oder ggf. mittels eines optional vorgesehenen Dübels in dem Verankerungsgrund befestigt ist) und zumindest ein Teil des anderen Abschnitts in dem Anbauteil befestigt ist.

Gemäß noch einem anderen Ausführungsbeispiel der vorliegenden Erfindung ist ein Verfahren zum Montieren eines Anbauteils an einem Verankerungsgrund geschaffen, wobei bei dem Verfahren ein Antrieb eines Befestigungselements mit einem Schaft angetrieben (insbesondere drehangetrieben) wird, zumindest ein Teil eines Gewindeabschnitts als ein dem Antrieb abgewandter Bereich des Schafts zumindest abschnittsweise mit einem ersten Schaftdurchmesser mit einem darauf angeordneten Gewinde in dem Verankerungsgrund (bzw. in einem optionalen Dübel im Verankerungsgrund) befestigt wird, und zumindest ein Teil eines anderen Abschnitts als ein dem Antrieb zugewandter Bereich des Schafts zumindest abschnittsweise mit einem zweiten Schaftdurchmesser in dem Anbauteil befestigt wird, wobei der zweite Schaftdurchmesser größer als der erste Schaftdurchmesser ist.

Gemäß noch einem anderen Ausführungsbeispiel der vorliegenden Erfindung wird ein Befestigungselement mit den oben beschriebenen Merkmalen zum Befestigen eines Anbauteils (insbesondere aus Holz), beispielsweise ein Fenster, an einem Verankerungsgrund (insbesondere aus Holz, Beton oder Stein) verwendet.

Im Rahmen dieser Anmeldung kann unter dem Begriff "Materialschnittstelle" insbesondere ein körperlicher (zum Beispiel Klebeschicht als Materialschnittstelle) oder unkörperlicher (zum Beispiel Schweißnaht als Materialschnittstelle bei Schweißen ohne Schweißzusatzwerkstoffe) Materialübergang verstanden werden, der räumlich an einer Verbindungsstelle zwischen Gewindeabschnitt und anderem Abschnitt angeordnet ist. Eine solche Materialschnittstelle kann als Fügeposition als also solche erkennbar sein.

Im Rahmen dieser Anmeldung kann unter dem Begriff "Anbauteil" insbesondere ein Bauteil verstanden werden, das an einem Verankerungsgrund mit oder ohne Abstand montierbar ist. Somit kann ein Anbauteil an dem Verankerungsgrund unter Beibehaltung eines vorbestimmten Abstands oder direkt daran anschließend angebaut werden.

Im Rahmen dieser Anmeldung kann unter dem Begriff "Verankerungsgrund" insbesondere ein zum Verankern des Befestigungselements geeigneter Untergrund verstanden werden. Ein solcher Verankerungsgrund kann insbesondere eine Wand, weiter insbesondere eine vertikale Wand, sein. Materialien für einen solchen Verankerungsgrund sind insbesondere Holz oder Holzbaustoffe, oder aber auch Beton- und Mauerwerksbaustoffe, Metall oder Kunststoffbauteile. Ferner kann ein solcher Verankerungsgrund auch ein beliebiger Kompositwerkstoff aus mehreren unterschiedlichen Materialkomponenten sein.

Im Rahmen dieser Anmeldung kann unter dem Begriff "Vollkörper" insbesondere ein Verankerungsgrund verstanden werden, der von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Verankerungsgrunds sein.

Im Rahmen dieser Anmeldung kann unter dem Begriff "Hohlkörper" insbesondere ein Verankerungsgrund verstanden werden, der im Inneren (insbesondere in einem Eindringbereich des Befestigungselements in den Verankerungsgrund) Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Porenbeton, Hochlochziegelsteine oder haufwerksporiger Leichtbeton.

Maßgeblich für den Begriff "Hohlkammer" ist daher, dass im Bereich einer solchen im Sinne dieser Beschreibung ein Befestigungselement keinen oder keinen nennenswerten Beitrag zur Befestigung des Befestigungselements in dem Verankerungsgrund hat. Insbesondere können Hohlkammern in diesem Sinne materialfreie (oder zumindest teilweise mit einem zur mechanischen Befestigung wenig oder im Wesentlichen nichts beitragenden Material, wie zum Beispiel Polystyrolschaum zur Wärmedämmung, gefüllte) Bereiche im Inneren des Verankerungsgrunds sein, die zumindest in einer Dimension eine Ausdehnung von mindestens 1 mm, insbesondere von mindestens 5 mm haben. Ferner können Hohlkammern in diesem Sinne insbesondere materialfreie Bereich im Inneren des Verankerungsgrunds sein, die ein Volumen von mindestens 10⁻⁸ m³, insbesondere von mindestens 10⁻⁶ m³ haben. Aber auch Poren großer Dichte können den Halt des Befestigungselements in dem Verankerungsgrund signifikant herabsetzen, so dass ein hochporöser Körper ebenfalls als Hohlkörper bezeichnet werden kann. Es ist ferner alternativ auch möglich, dass die Kammern mit einem Dämmmaterial gefüllt sind, beispielsweise Polystyrolschaum, Steinwolle, etc.

Gemäß einem exemplarischen Ausführungsbeispiel der Erfindung ist ein Befestigungselement geschaffen, das einen Schaft mit mindestens zwei Abschnitten unterschiedlicher Durchmesser aufweist, von denen mindestens einer ein Gewinde hat. Mit Vorteil sind dieser Gewindeabschnitt und der andere Abschnitt ehemals getrennte Körper, die aneinander an einer Materialschnittstelle angestückt und somit miteinander verbunden sind. Dies bedeutet, dass der Gewindeabschnitt und der andere Abschnitt zunächst voneinander separat gebildet und prozessiert werden und erst nach dem Bilden des Gewindes des Gewindeabschnitts aneinandergefügt werden. Dies hat den Vorteil, dass das Formen bzw. Pressen (zum Beispiel mittels Walzens oder Aufstauchens) eines von Anfang an einstückigen Schafts mit mindestens zwei unterschiedlich großen Durchmessern zum Bilden des Rohlings beim Herstellen des Befestigungselements entbehrlich ist. Dieser Prozess kann besonders bei in axialer Richtung sehr langen Befestigungselementen herkömmlich zu Qualitätsproblemen mit einem Befestigungselement aus zwei Schaftabschnitten mit unterschiedlichen Durchmessern führen und ist schwierig. Indem gemäß einem exemplarischen Ausführungsbeispiel der Erfindung der Gewindeabschnitt unter Ausbildung seines Gewindes prozessiert (insbesondere gewalzt) wird und erst nachfolgend der so hergestellte Gewindeabschnitt mit dem anderen Abschnitt größeren Außendurchmessers verbunden wird, kann das Herstellungsverfahren insgesamt und die Fehlerrobustheit der Schraube verbessert werden.

Die beiden Abschnitte des Schafts können also aneinander materialschlüssig angestückt werden, anstatt von Anfang an aus einem Stück herausgearbeitet zu werden. Dadurch ist auch das Herstellen besonders langer Befestigungselemente vereinfacht. Besonders lange Befestigungselemente, wie sie zum Beispiel für die Fenstermontage vorteilhaft sind, erlauben ein Walzen des gesamten Befestigungselements, insbesondere zum Ausbilden eines oder mehrerer Gewinde daran, nur mit hohem Aufwand. Um diese Schwierigkeiten zu überwinden, werden die beiden Abschnitte (oder sogar drei oder mehr separate Abschnitte) zunächst separat bearbeitet (und mindestens eines davon auch mit einem Gewinde versehen, insbesondere mittels Walzens), bevor die beiden Abschnitte (oder die sogar drei oder mehr separaten Abschnitte) miteinander verbunden werden. Ein Walzen von Abschnitten mit unterschiedlichen Durchmessern ist dadurch vermieden.

Gemäß einem anderen Aspekt der Erfindung kann ein entsprechendes Befestigungselement mit Vorteil für die Montage eines Anbauteils an einem Verankerungsgrund eingesetzt werden. Hierbei kann der Gewindeabschnitt in den Verankerungsgrund eingeschraubt werden, und zwar - je nach Beschaffenheit des Verankerungsgrunds - mit oder ohne Dübel. Der andere Abschnitt kann durch das Anbauteil hindurchgeführt werden. Dann hält der Gewindeabschnitt in dem Verankerungsuntergrund und das Befestigungselement als Ganzes das Anbauteil an dem Verankerungsuntergrund oder beabstandet von diesem. Mit anderen Worten kann eine solche Montage, zum Beispiel eines Fensters an einer Gebäudewand, mittels des Befestigungselements gemäß dem exemplarischen Ausführungsbeispiel der Erfindung zuverlässig und robust durchgeführt werden, wobei das Befestigungselement leicht hergestellt werden kann.

Im Weiteren werden zusätzliche Ausführungsbeispiele des Herstellungsverfahrens, des Befestigungselements, des Montagekits, der Montageanordnung, des Verfahrens und der Verwendung beschrieben.

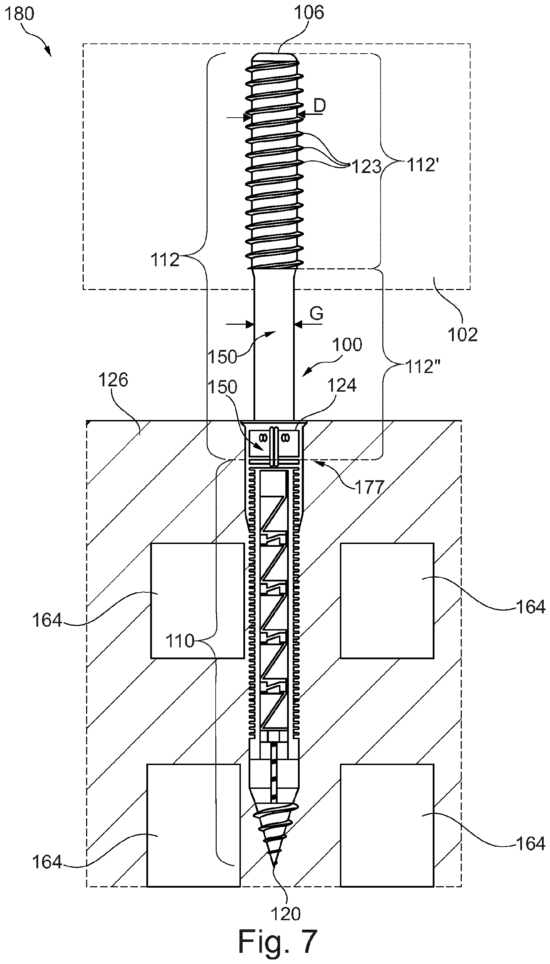

Gemäß einem Ausführungsbeispiel kann der andere Abschnitt einen dem Antrieb zugewandten ersten Teilabschnitt und einen der Materialschnittstelle zugewandten zweiten Teilabschnitt aufweisen, die unterschiedliche Schaftdurchmesser aufweisen. Dabei kann der erste Teilabschnitt einen Schaftdurchmesser aufweisen, der größer als ein Schaftdurchmesser des zweiten Teilabschnitts ist. Insbesondere kann der erste Teilabschnitt ein anderes Gewinde aufweisen und/oder der zweite Teilabschnitt gewindefrei, insbesondere an seiner Mantelfläche glatt, sein. Allgemeiner ausgedrückt kann also zumindest einer des Gewindeabschnitts und des anderen Abschnitts zumindest zwei Teilabschnitte mit unterschiedlichen Schaftdurchmessern aufweisen. Auf diese Weise ist es möglich, nach Verbinden des Gewindeabschnitts mit dem anderen Abschnitt insgesamt mindestens drei Schaftbereiche mit in axialer Richtung unterschiedlicher Charakteristik zu erhalten. Zum Beispiel kann zwischen einem schraubenkopfseitigen Gewindebereich und einem schraubenspitzenseitigen Endbereich des Schafts ein Zwischenbereich oder Zwischenabschnitt mit an eine bestimmte Anwendung angepassten Eigenschaften angeordnet sein. Beispiele hierfür sind in Figur 7 bis Figur 10 angegeben.

Gemäß einem Ausführungsbeispiel kann der zweite Teilabschnitt einen Schaftdurchmesser aufweisen, der größer als ein Schaftdurchmesser des Gewindeabschnitts ist. Insbesondere kann die Größe des Schaftdurchmessers des zweiten Teilabschnitts zwischen der Größe des Schaftdurchmessers des Gewindeabschnitts und der Größe des Schaftdurchmessers des ersten Teilabschnitts sein. Dann verjüngt sich das fertig zusammengesetzte Befestigungselement zum Beispiel stufenförmig vom Kopf bis zur Spitze. Indem der zweite Teilabschnitt, der im zusammengesetzten Zustand des Befestigungselements einen Zwischenabschnitt bildet, mit einem größeren Schaftdurchmesser vorgesehen wird als der Gewindeabschnitt, kann ein Teil dieses Zwischenabschnitts im montierten Zustand in einen Befestigungsuntergrund (zum Beispiel einen Steinuntergrund oder einen Holzuntergrund) hineinragen. Dadurch wird ein Befestigungselement erhalten, das einer Scherbelastung besser widerstehen kann und somit fehlerrobuster durch das Anbauteil in den Befestigungsuntergrund eingebracht bzw. gehalten werden kann.

Gemäß einem anderen Ausführungsbeispiel kann hingegen zumindest einer des Gewindeabschnitts und des anderen Abschnitts im Wesentlichen entlang seiner gesamten Längserstreckung einen im Wesentlichen konstanten Schaftdurchmesser aufweisen. Die Bezeichnung "im Wesentlichen" bedeutet in diesem Zusammenhang, dass entlang der axialen Erstreckung des jeweiligen Abschnitts nur ganz unwesentliche Veränderungen des jeweiligen Schaftdurchmessers und/oder Veränderungen des jeweiligen Schaftdurchmessers nur über ganz unwesentliche axiale Bereiche hinweg auftreten können. Die beschriebene Ausgestaltung ermöglicht aber eine einfache Herstellung des Befestigungselements auf Basis von einfach bereitzustellenden Rohlingen.

Gemäß einem Ausführungsbeispiel kann das Anstücken ein Verschweißen des Gewindeabschnitts mit dem anderen Abschnitt an der Materialschnittstelle aufweisen. Entsprechend kann die Materialschnittstelle eine Schweißnaht sein. Unter Schweißen kann ein unlösbares Verbinden der Schaftabschnitte unter Bildung einer Schweißnaht durch Anwendung von elektrischer Energie, Wärme und/oder Druck, mit oder ohne Schweißzusatzwerkstoffe verstanden werden. Die nötige Schweißenergie kann von außen zugeführt werden. Schweißhilfsstoffe, wie Schutzgase, Schweißpulver oder Pasten, können das Schweißen unterstützen. Schweißen kann durch Wärmezufuhr bis zum Schmelzen des Werkstoffs oder durch Wärmezufuhr und zusätzliche Krafteinwirkung (Druck) auf das Werkstück erfolgen. Mit Vorteil kann das Fügen des Gewindeabschnitts und des anderen Abschnitts also durch Verschweißen erfolgen. In diesem Fall ist die Materialschnittstelle zwischen den beiden Abschnitten des Schafts eine Schweißstelle. Ein Verbinden der beiden zum Beispiel aus Stahl gefertigten Abschnitte des Schafts durch Schweißen ist schnell, mit geringem Aufwand und ohne Gefahr hinsichtlich einer möglichen Schädigung des Befestigungselements möglich.

Gemäß einem anderen Ausführungsbeispiel kann das Anstücken ein Verkleben des Gewindeabschnitts mit dem anderen Abschnitt an der Materialschnittstelle aufweisen. Entsprechend kann die Materialschnittstelle eine Klebstoffschicht sein. Alternativ zum Schweißen kann auch durch Verkleben eine stoffschlüssige Verbindung an der Materialschnittstelle zwischen den beiden Abschnitten des Schafts geschaffen werden. Hierfür kann zum Beispiel ein Zweikomponentenkleber, ein Sekundenkleber oder ein anderer Kleber verwendet werden, der dem Befestigungselement eine ausreichende Robustheit an der Materialschnittstelle verleiht, so dass das Befestigungselement auch für die Montage eines Anbauteils an einem Verankerungsuntergrund einsetzbar ist.

Gemäß einem Ausführungsbeispiel kann das Gewinde des Gewindeabschnitts gebildet, insbesondere gewalzt, werden, bevor der Gewindeabschnitt und der andere Abschnitt aneinander angestückt werden. Unter Gewindewalzen oder Gewinderollen kann eine spanlose Fertigung von Gewinden durch Kaltumformung verstanden werden, bei der das Profil in die Oberfläche des entsprechenden Rohteils gewalzt wird. Indem das Gewinde des Gewindeabschnitts vor dem Fügen oder Anstücken der beiden Abschnitte des Schafts erfolgt, wird der Prozess des Walzens nicht durch den Umstand erschwert, dass die beiden Abschnitte des Schafts unterschiedliche Außendurchmesser aufweisen.

Gemäß einem Ausführungsbeispiel kann der andere Abschnitt als anderer Gewindeabschnitt gebildet werden, der an dem zweiten Schaftdurchmesser mit einem darauf angeordneten anderen Gewinde versehen wird. Wenn die zwei Abschnitte des Schafts beide als Gewindeabschnitte und mit unterschiedlichen Durchmessern ausgebildet werden, sind die Vorteile aufgrund des beschriebenen Herstellungsverfahrens besonders ausgeprägt nutzbar. Es ist technisch äußerst schwierig, zwei Gewinde auf einen fertig hergestellten Schaft mit zwei oder mehr unterschiedlichen Durchmesserbereichen aufzuwalzen. Wenn hingegen die beiden Abschnitte zunächst als separate Gewindeabschnitte inklusive der Bildung des Gewindes darauf mittels Walzens oder dergleichen hergestellt werden, können die beiden Abschnitte nachfolgend bequem aneinander angestückt oder gefügt werden, ohne dass dies technologische Schwierigkeiten bereitet. Eine solche Schraube kann gemeinsam mit einem Dübel eingesetzt werden, um in Kombination eine Montage eines Anbauteils in einem Verankerungsgrund mit Hohlräumen zu ermöglichen. Der Dübel kann trotz der Hohlräume zu einer ausreichenden Haltekraft beitragen. Bei einer Montage des Anbauteils in einem Verankerungsgrund ohne Hohlräume kann dieselbe Schraube dagegen dübelfrei eingesetzt werden, da der massive Verankerungsuntergrund auch ohne Dübel eine ausreichende Haltkraft bietet.

Gemäß einem anderen Ausführungsbeispiel kann der andere Abschnitt als gewindefreier Bolzenabschnitt gebildet werden. Demgemäß kann ein Befestigungselement zum Befestigen eines Anbauteils an einem Verankerungsgrund geschaffen werden, mit dem simultan eine ausreichend feste Befestigung von Anbauteil und Verankerungsgrund aneinander gewährleistet ist und außerdem eine gewisse Ausgleichsbewegung zwischen Anbauteil und Verankerungsgrund ermöglicht bleibt. Ersteres kann durch die Kombination des Gewindeabschnitts mit dem gewindefreien Bolzenabschnitt erreicht werden, da auf diese Weise der Gewindeabschnitt sicher in dem Verankerungsgrund verankert ist und der Bolzenabschnitt zusätzlich eine gewisse reibschlüssige Verbindung zu dem Anbauteil bewirkt. Gleichzeitig sorgt das Fehlen eines Gewindes in dem Bolzenabschnitt dafür, dass sich das Anbauteil und der Verankerungsgrund relativ zueinander in allerdings eingeschränkter Weise und ungeachtet des gewissen Reibschlusses relativ zueinander bewegen können, jedoch das Anbauteil weiter gehalten ist. Dies ermöglicht es dem montierten Verbund, im Laufe der Zeit auftretende geometrische Veränderungen infolge physikalischer Effekte (zum Beispiel arbeitendes Holz, durch Wärmeausdehnung bedingte geometrische Unterschiede im Winter bzw. im Sommer, etc.) auszugleichen. Insbesondere im Fertighausbau in Holzständerbauweise hat sich herkömmlich gezeigt, dass zum Beispiel bei aus Holz gebildeten Verankerungsgründen, auf denen Fensterrahmen oder andere Anbauteile montiert werden sollen, im Laufe der Zeit verziehen können. Ein solcher Verzug, der durch innere Spannungen (insbesondere durch arbeitendes Holz) des Verbunds aus Anbauteil und Verankerungsgrund zustande kommen kann, kann durch das gewindefreie bolzenförmige Ausgestalten des im montierten Zustand in dem Anbauteil angeordneten Bolzenabschnitts ausgeglichen werden. Anschaulich bildet der Bolzenabschnitt in einem Durchgangsloch des Anbauteils ein Loslager, das zum Abbau von mechanischen Spannungen zwischen Anbauteil und Verankerungsgrund in der Lage ist. Indem der zweite Schaftdurchmesser (der einem Kreisdurchmesser eines kreiszylindrischen Bolzenabschnitts entsprechen kann) des Bolzenabschnitts größer als der erste Schaftdurchmesser (das heißt dessen Kerndurchmesser ohne Gewindegänge) ist, kann der in Montagerichtung vorderseitige Gewindeabschnitt durch ein Durchgangsloch in dem Anbauteil durchgeführt werden und sich dann vorzugsweise selbstschneidend bzw. gewindefurchend eine Verankerung in dem Verankerungsgrund bilden. Vorteilhaft kann ein Außendurchmesser der Gewindegänge kleiner oder gleich dem zweiten Schaftdurchmesser sein. Dadurch sind eine einfache Montage und eine sichere Befestigung gewährleistet. Indem der andere Abschnitt als gewindefreier (insbesondere glatter) Bolzenabschnitt gebildet ist, ist kein weiteres Bilden eines Gewindes auf diesem anderen Abschnitt erforderlich. Das Befestigungselement kann aufgrund des zunächst separaten Bildens der Schaftabschnitte mit geringem Herstellungsaufwand hergestellt werden, und zwar ohne dass das Walzen des Gewindes des Gewindeabschnitts das Herstellungsverfahren der Schraube kompliziert.

Gemäß einem Ausführungsbeispiel kann zumindest einer des Gewindeabschnitts und des anderen Abschnitts an einem (vor dem Anstücken oder Fügen freien) Ende zum Bilden der Materialschnittstelle ein Schmelzdepot aufweisen, das eingerichtet ist, beim Anstücken des Gewindeabschnitts an den anderen Abschnitt selektiv aufzuschmelzen und sich nachfolgend unter Bildung der Materialschnittstelle wieder zu verfestigen. Ein solcher verjüngter oder schmaler Überstand kann zum Beispiel konusförmig, kegelstumpfförmig, pyramidisch und/oder zylindrisch ausgebildet werden und kann anschaulich ein Materialdepot zum Ausbilden der Materialschnittstelle enthalten.

Gemäß einem Ausführungsbeispiel kann einer des Gewindeabschnitts und des anderen Abschnitts mit einem Überstand versehen werden und der andere des Gewindeabschnitts und des anderen Abschnitts mit einer zu dem Überstand invers geformten Aussparung versehen werden. Im Bereich der Materialschnittstelle kann der Überstand in die Aussparung eingeführt werden. Nach Ausbilden dieses Formschlusses kann nachfolgend das eigentliche Fügen oder Anstücken (zum Beispiel durch Schweißen oder Kleben) erfolgen, was eine untrennbare stoffschlüssige Verbindung ausbildet. Die beiden Abschnitte können somit form- und stoffschlüssig und daher mechanisch sehr stabil bzw. robust miteinander verbunden werden.

Gemäß einem Ausführungsbeispiel können der Gewindeabschnitt und der andere Abschnitt aus unterschiedlichen Materialien hergestellt sein. Auch können der Gewindeabschnitt und der andere Abschnitt einerseits und die Materialschnittstelle andererseits aus unterschiedlichen Materialien hergestellt sein. Die Tatsache, dass der Gewindeabschnitt und der andere Abschnitt zunächst separat ausgebildet werden und insbesondere nach Herstellen von einem oder zwei Gewinden daran an der Materialschnittstelle verbunden werden, ermöglicht es auch, den Gewindeabschnitt und den anderen Abschnitt aus unterschiedlichen Materialien herzustellen. Dadurch wird die Designfreiheit der Auswahl geeigneter Materialien im Hinblick auf bestimmte Eigenschaften, wie mechanische Festigkeit, thermische Leitfähigkeit, Gewicht, etc. erhöht.

Mit Vorteil kann das Montagekit bzw. die Montageanordnung verwendet werden, um einen Fensterrahmen als Anbauteil an einer vertikalen Wand als Verankerungsgrund mit oder ohne Abstand zu befestigen. Das hierbei eingesetzte Befestigungselement ist kostengünstig, mit geringem Aufwand, schnell und fehlerrobust fertigbar.

Der Gewindeabschnitt kann an den anderen Abschnitt an der Materialschnittstelle untrennbar angestückt sein. Im Rahmen der vorliegenden Anmeldung wird in diesem Zusammenhang unter dem Begriff "untrennbar" verstanden, dass das Abtrennen des anderen Abschnitts von dem Gewindeabschnitt ohne Zerstörung des Befestigungselements verunmöglicht ist. Durch das einstückige und zerstörungsfrei untrennbare Ausbilden der beiden Abschnitte des Schafts ist die Handhabung des Befestigungselements (als ein Stück) an einer Baustelle vereinfacht und ist eine Fehlmontage ausgeschlossen.

Gemäß einem Ausführungsbeispiel kann der Antrieb (zum Beispiel als Längsschlitz, Kreuzschlitz, AW-Antrieb, etc.) in einer Stirnfläche eines Endabschnitts des Schafts des dann kopffreien Befestigungselements vorgesehen sein. Bei einer solchen Konfiguration des Befestigungselements ohne Kopf kann der Antrieb unmittelbar in einer außenseitigen Stirnfläche des Schafts gebildet sein. Dies ist bei Ausgestaltungen vorteilhaft, bei denen unerwünscht ist (zum Beispiel aus optischen Gründen), dass nach der Montage des Anbauteils an dem Verankerungsgrund von außen ein Kopf auf der außenseitigen Fläche des Anbauteils aufliegt. Anschaulich kann das Befestigungselement dann vollständig in Anbauteil und Verankerungsgrund versenkt werden. Ein solches Befestigungselement ist auch mit geringem Aufwand herstellbar.

Gemäß einem anderen Ausführungsbeispiel kann das Befestigungselement einen gegenüber dem zweiten Schaftdurchmesser radial aufgeweiteten Kopf aufweisen, wobei der Antrieb (zum Beispiel als Längsschlitz, Kreuzschlitz, AW-Antrieb, etc.) in einer Stirnfläche des Kopfs vorgesehen ist. Besonders vorteilhaft kann das Befestigungselement also einen radial aufgeweiteten Kopf aufweisen, der im montierten Zustand von außen auf die außenseitige Oberfläche des Anbauteils drücken kann. Mittels des Kopfes kann somit die Befestigungswirkung im Zusammenspiel mit dem Gewindeabschnitt in dem Verankerungsgrund gestärkt werden, ohne die Fähigkeit des Bolzenabschnitts zu verlieren, bei Auftreten mechanischer Spannungen eine gewisse Ausgleichsbewegung des Anbauteils relativ zu dem Verankerungsgrund zuzulassen.

Gemäß einem Ausführungsbeispiel kann das Befestigungselement eine punktförmige Endspitze aufweisen. Eine solche punktförmige Endspitze vermag es, kraftarm in den Verankerungsgrund einzudringen und dort ein Aufnahmeloch zu bilden, selbst wenn der Verankerungsgrund vor dem Setzvorgang des Befestigungselements vorbohrungsfrei ausgebildet ist. Alternativ kann das Ende des Befestigungselements von einer oder mehreren Schneidkanten gebildet sein.

Gemäß einem Ausführungsbeispiel kann sich der Gewindeabschnitt ausgehend von der Endspitze erstrecken. Wenn der Gewindeabschnitt, genauer gesagt der erste Gewindegang davon, bereits im Bereich der punktförmigen Endspitze beginnt, begünstigt dies ein Selbstfurchen eines Gewindes in dem Verankerungsgrund. Dies kann mit oder sogar ohne Vorbohrung in dem Verankerungsgrund erfolgen, wenn bei Drehantreiben des Antriebs das Befestigungselement axial in den Verankerungsgrund eingeschraubt wird. Diese Ausgestaltung führt von Anfang an zu einem hohen Maß an Setzkontrolle beim Setzen der Schraube.

Gemäß einem Ausführungsbeispiel kann der Bolzenabschnitt eine durchgehend profilfreie, insbesondere eine durchgehend glatte Oberfläche aufweisen. Mit anderen Worten kann der gesamte Bolzenabschnitt in axialer wie radialer Richtung von Profilstrukturen (wie Gewindebereichen, Rippen, Schneiden, etc.) frei sein und dann eine gewünschte Loslagerfunktion wirksam bereitstellen.

Gemäß einem Ausführungsbeispiel kann der Schaft zumindest abschnittsweise gehärtet sein, insbesondere zumindest an dem Gewindeabschnitt. Eine solche Ausgestaltung erlaubt eine dübelfreie Montage des Befestigungselements selbst in einem robusten Verankerungsgrund.

Gemäß einem Ausführungsbeispiel kann der Gewindeabschnitt ein selbstschneidendes Gewinde aufweisen. Dies ermöglicht mit geringem Montageaufwand eine hohe Befestigungskraft.

Gemäß einem Ausführungsbeispiel des Verfahrens kann ermittelt werden, ob der Verankerungsgrund ein Vollkörper oder ein Hohlkörper ist. Falls der Verankerungsgrund ein Vollkörper ist, kann ein dübelfreies Eindrehen des Befestigungselements durch das Anbauteil hindurch in den als Vollkörper ausgestalteten Verankerungsgrund erfolgen. Falls der Verankerungsgrund dagegen ein Hohlkörper ist, kann ein Eindrehen des Befestigungselements durch das Anbauteil hindurch in einen Dübel in einer Bohrung in dem als Hohlkörper ausgestalteten Verankerungsgrund erfolgen. Durch diese Maßnahme kann für annähernd alle Verankerungsuntergründe, mit oder ohne Hohlräume, eine gute Befestigung in dem Verankerungsgrund sichergestellt werden. Die Kombination aus dem beschriebenen optionalen Dübelkonzept und der Loslagerfunktion des Bolzenabschnitts hat sich überraschend als besonders leistungsfähiges Montagesystem herausgestellt.

Gemäß einem Ausführungsbeispiel kann bei dem Ermitteln ein Verankerungsgrund aus Vollholz, ein Verankerungsgrund aus Vollstein, ein Verankerungsgrund aus Vollbeton, ein Verankerungsgrund aus Vollmetall oder ein Verankerungsgrund aus Vollkeramik als Vollkörper angesehen werden.

Gemäß einem Ausführungsbeispiel kann bei dem Ermitteln ein Verankerungsgrund aus Hohlblockstein oder ein poröser Verankerungsgrund sowie ein Holzuntergrund mit makroskopischen Löchern als Hohlkörper angesehen werden.

Gemäß einem Ausführungsbeispiel kann ein Einbringen des Befestigungselements in den Verankerungsgrund vorbohrungsfrei oder nach Bilden einer Vorbohrung in dem Verankerungsgrund erfolgen. Die beschriebenen Ausgestaltungen des Befestigungselements sind sowohl kompatibel mit einer vorbohrungsfreien Montage des Befestigungselements in dem Verankerungsgrund als auch mit einer Montage des Befestigungselements in einem Verankerungsgrund, der vor dem Einbringen des Befestigungselements bereits mit einer Vorbohrung versehen worden ist. Die vorbohrungsfreie Ausgestaltung ermöglicht eine besonders feste Verbindung zwischen Befestigungselement und Verankerungsgrund, wohingegen die Ausgestaltung mit Vorbohrung einen kraftarmen Setzvorgang begünstigt.

Gemäß einem Ausführungsbeispiel kann ein Einbringen des Befestigungselements in das Anbauteil nach Bilden einer Vorbohrung (insbesondere einer Durchgangsbohrung) in dem Anbauteil erfolgen. Eine Montage mit vorgebohrtem Anbauteil ist unkompliziert, da vor dem Eindringen in den Verankerungsgrund aufgrund der beschriebenen Größenverhältnisse von Gewindeabschnitt und Bolzenabschnitt dann ein einfaches Bohren des Untergrundes und Durchstecken des Befestigungselements durch das Anbauteil ermöglicht ist. Bei anderen Ausführungsformen kann jedoch eine Montage des Anbauteils an dem Verankerungsgrund auch ohne Vorbohrung des Anbauteils erfolgen.

Zum Beispiel kann der Einbau auch wie folgt durchgeführt werden: Es kann zunächst ein Loch in einen Rahmen (oder ein anderes Anbauteil) gebohrt werden. Im Verankerungsgrund kann durch dieses Loch gebohrt werden. Ein Dübel kann durch das Loch im Anbauteil (insbesondere Rahmenloch) in den Verankerungsgrund bzw. Untergrund gesteckt werden. Das zum Beispiel als Schraube ausgebildete Befestigungselement kann dann durch das Anbauteil in den Dübel gesetzt werden.

Das Anbauteil, das zum Beispiel als Fenster oder Fensterrahmen ausgebildet sein kann, kann zum Beispiel Holz, Kunststoff (insbesondere PVC), Aluminium, etc., aufweisen. Der Verankerungsgrund kann vorzugsweise Holz aufweisen, wobei auch andere Verankerungsgründe (wie zum Beispiel Beton oder Hohlsteine) möglich sind. Besonders bevorzugt ist die Anwendung eines Befestigungselements gemäß einem Ausführungsbeispiel der Erfindung in Holzständerbauweise im Bereich von Fertighäusern. Wenn in einem solchen technischen Zusammenhang zum Beispiel ein Fenster starr mit einem Gebälk verschraubt wird, kann es insbesondere unter dem Einfluss von Feuchtigkeit und/oder Temperatur zu einem Verziehen des Fensterrahmens und/oder des Verankerungsgrunds kommen. Wenn der Bolzenabschnitt des Befestigungselements gemäß einem exemplarischen Ausführungsbeispiel eine Ausgleichsbewegung des Anbauteils relativ zu dem Verankerungsgrund zulässt, aber immer noch eine ausreichend starke Befestigungswirkung bereitstellt, kann ein solches Verziehen vermieden oder stark unterdrückt werden. Hierfür ist das Freihalten eines Ringspalts zwischen Bolzenabschnitt und Anbauteil vorteilhaft. Eine übermäßige Zwängung von Anbauteil und Verankerungsgrund kann dadurch vermieden werden.

Vorteilhaft kann die Befestigung zwischen dem beschriebenen Befestigungselement mit Gewindeabschnitt und Bolzenabschnitt in einer Montagerichtung erfolgen, die von einer Hauptbelastungsrichtung des Systems aus Anbauteil und Verankerungsgrund unterschiedlich ist, entlang derer im Betrieb des Anbauteils (genauer gesagt des Bolzenabschnitts im Anbauteil) an dem Verankerungsgrund die größten Betriebskräfte einwirken. Ist das Anbauteil zum Beispiel ein Fensterrahmen, so ist die Hauptbelastungsrichtung durch Betriebskräfte die Windrichtung, die von außen nach innen gerichtet ist. Um auch unter diesen Umständen eine ausreichend stabile Befestigung zu ermöglichen, kann die Befestigung von Anbauteil und Verankerungsgrund in dieser Hauptbelastungsrichtung durch ein Schraubengewinde erfolgen, wohingegen die Befestigung in einer dazu zum Beispiel orthogonalen Richtung durch das Befestigungselement mit Bolzenabschnitt und Gewindeabschnitt erfolgen kann. Dadurch ist ein belastungsspezifisches Verhältnis zwischen Befestigungskraft und Ausgleichsvermögen bereitstellbar.

Gemäß einem Ausführungsbeispiel kann das Anbauteil einen Fensterrahmen und/oder der Verankerungsgrund eine Wand aufweisen. Alternativ kann das Anbauteil aber auch eine Türzarge, einen Blockrahmen oder ein sonstiges Rahmenbauteil darstellen.

Im Folgenden werden exemplarische Ausführungsbeispiele der vorliegenden Erfindung mit Verweis auf die folgenden Figuren detailliert beschrieben.
Figur 1 bis Figur 4 zeigen Befestigungselemente gemäß exemplarischen Ausführungsbeispielen der Erfindung.
Figur 5 und Figur 6 zeigen noch getrennte Körper, die als aneinander zu fügende Abschnitte eines Schafts als Basis zum Herstellen eines Befestigungselements gemäß einem exemplarischen Ausführungsbeispiel der Erfindung eingesetzt werden können.
Figur 6A zeigt einen zu Figur 6 alternativen anderen Abschnitt eines noch getrennten Körpers, der mit dem in Figur 5 gezeigten Gewindeabschnitt zum Herstellen eines Befestigungselements gemäß einem anderen exemplarischen Ausführungsbeispiel der Erfindung eingesetzt werden kann.
Figur 7 zeigt eine Schraube und einen Dübel eines Montagekits gemäß einem exemplarischen Ausführungsbeispiel der Erfindung in einem Zustand, in dem die Schraube und der Dübel in einem als Hohlkörper ausgebildeten Verankerungsgrund versenkt sind und einen vorgebbaren Abstand zwischen einem Anbauteil und dem Verankerungsgrund aufrechterhalten.
Figur 8 zeigt die Schraube des Montagekits gemäß Figur 7 ohne den Dübel in einem als Vollkörper ausgebildeten Verankerungsgrund.
Figur 9 zeigt ein Befestigungselement gemäß einem anderen Ausführungsbeispiel der Erfindung in einem in einem Anbauteil und einem als Vollkörper ausgebildeten Verankerungsgrund dübelfrei montierten Zustand.
Figur 10 zeigt das Befestigungselement gemäß Figur 9 in einem in einem Anbauteil und einem als Hohlkörper ausgebildeten Verankerungsgrund samt Dübel montierten Zustand.

Gleiche oder ähnliche Komponenten in unterschiedlichen Figuren sind mit gleichen Bezugsziffern versehen.

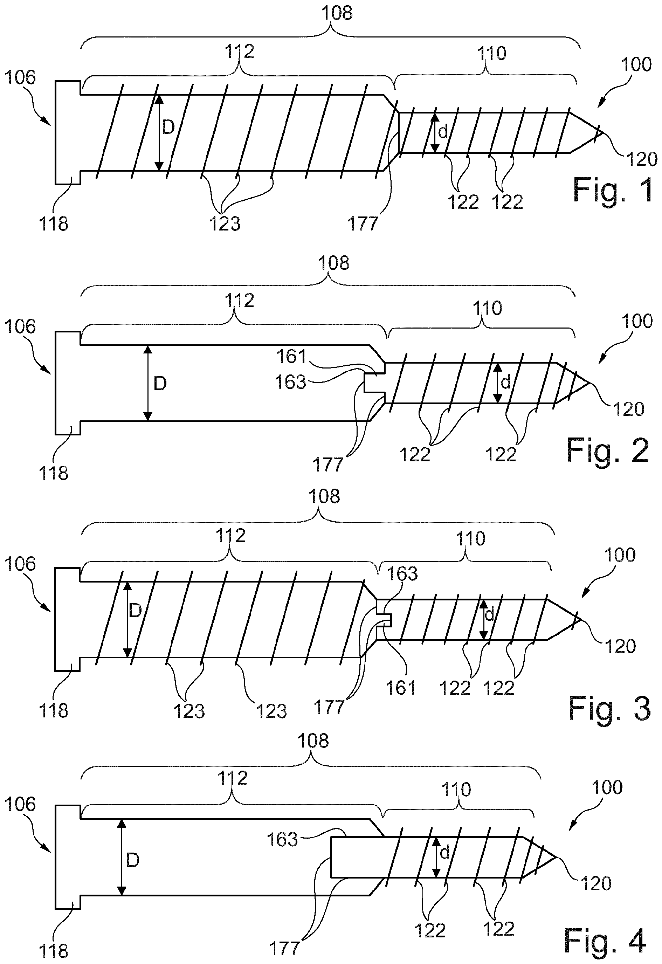

Figur 1 bis Figur 4 zeigen Befestigungselemente 100 gemäß exemplarischen Ausführungsbeispielen der Erfindung.

In **Figur 1** ist eine Seitenansicht eines als Schraube ausgebildeten Befestigungselements 100 zum Montieren eines Anbauteils 102 an einem Verankerungsgrund 104, 126 (vergleiche Figur 7 bis Figur 10) dargestellt. Obgleich dies in Figur 1 nicht im Detail zu erkennen ist, weist das Befestigungselement 100 in einer Stirnfläche eines Kopfs 118 einen Antrieb 106 (zum Beispiel Längsschlitz, Kreuzschlitz, AW-Antrieb, etc.) zum Drehantreiben des Befestigungselements 100 mittels eines Schraubendrehers oder eines Akkuschraubers (nicht gezeigt) auf.

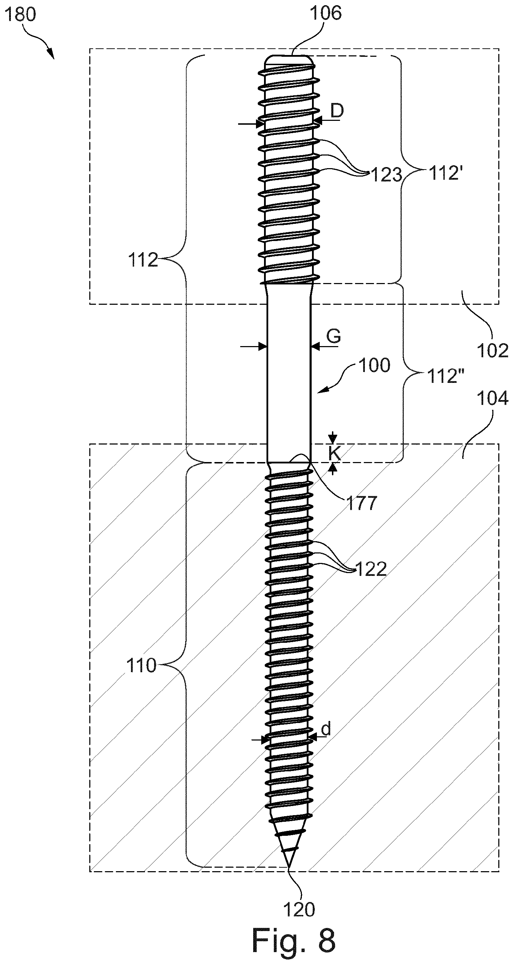

Das Befestigungselement 100 hat ferner einen sich an den Kopf 118 anschließenden Schaft 108. Der Schaft 108 ist aus einem Gewindeabschnitt 110 und einem anderen Abschnitt 112 zusammengesetzt, der in dem dargestellten Ausführungsbeispiel als anderer Gewindeabschnitt ausgebildet ist. Der Gewindeabschnitt 110 ist zum Befestigen in dem Verankerungsgrund (siehe Bezugszeichen 104 in Figur 8) mittels Eindrehens ausgebildet und in einem dem Antrieb 106 abgewandten Endbereich des Schafts 108 angeordnet. Der Gewindeabschnitt 110 hat über seine wesentliche Erstreckung hinweg einen ersten Schaftdurchmesser d. Auf einer äußeren Mantelfläche des Gewindeabschnitt 110 ist zum Beispiel mittels Walzens ein Gewinde 122 angeformt. Am freien Ende des Gewindeabschnitts 110 befindet sich eine Spitze 120, die dem Kopf 118 gegenüberliegt. Der andere Abschnitt 112 des Schafts 108 ist zum Befestigen in dem Anbauteil 102 mittels Eindrehens in einem dem Antrieb 106 zugewandten Bereich des Schafts 108 angeordnet und über seine wesentliche Erstreckung hinweg mit einem zweiten Schaftdurchmesser D gebildet, der größer als der erste Schaftdurchmesser d ist. Auf einer äußeren Mantelfläche des anderen Abschnitts 112 ist zum Beispiel mittels Walzens ein anderes Gewinde 123 gebildet. Am Übergang zwischen dem Gewindeabschnitt 110 und dem anderen Abschnitt 112 verjüngt sich der Schaft 108 konisch, kann aber auch abgestuft sein.

Der Gewindeabschnitt 110 und der andere Abschnitt 112 werden zunächst separat voneinander samt deren jeweiligem Gewinde 122 bzw. 122 hergestellt, und erst nachfolgend aneinander an einer Materialschnittstelle 177 angestückt bzw. gefügt. Dies bedeutet, dass das Gewinde 122 des Gewindeabschnitts 110 gewalzt werden kann, bevor der Gewindeabschnitt 110 und der andere Abschnitt 112 aneinander angestückt werden. Spiegelbildlich kann das andere Gewinde 123 des anderen Abschnitts 112 gewalzt werden, bevor der Gewindeabschnitt 110 und der andere Abschnitt 112 aneinander angestückt werden. In dem dargestellten Ausführungsbeispiel ist die Materialschnittstelle 177 eine Schweißnaht. Somit kann das beschriebene Anstücken durch ein Verschweißen des Gewindeabschnitts 110 an dem anderen Abschnitt 112 an der Materialschnittstelle 177 realisiert werden. Da sie zunächst separat gebildet werden, können der Gewindeabschnitt 110 und der andere Abschnitt 112 wahlweise aus demselben Material (zum Beispiel Stahl) oder aus unterschiedlichen Materialien hergestellt sein.

Figur 1 zeigt also ein als lange Schraube ausgebildetes Befestigungselement 100, bei dem zwei mit einem Gewinde 122, 123 versehene Abschnitte 110, 112 miteinander an der Materialschnittstelle 177 verschweißt (oder alternativ verklebt) sind. Indem das Befestigungselement 100 gemäß Figur 1 so hergestellt wird, dass zunächst die beiden Abschnitte 110, 112 des Schafts 108 voneinander getrennt bearbeitet werden und erst nach dem Ausbilden der Gewinde 122, 123 miteinander an der Materialschnittstelle 177 axial aneinandergesetzt werden, ist der Herstellungsprozess vereinfacht. Auf diese Weise ist es nämlich möglich, dass kein einstückiger Bolzen mit zwei Schaftabschnitten unterschiedlicher Durchmesser d, D mittels Walzens zu einem Gewindebolzen verarbeitet werden muss. Das Formen des Rohlings als Basis für ein Walzen von zwei Gewinden 122, 123 mit unterschiedlichem Durchmessern ist insbesondere für das als sehr lange Schraube ausgebildete Befestigungselement 100 schwierig. Genauer gesagt kann das Aufstauchen (insbesondere durch Ausüben einer Axialkraft auf einen Rohling) des dicken Endes (siehe Bezugszeichen 112) bzw. das Reduzieren des Durchmessers (insbesondere durch Walzen) im Bereich von Bezugszeichen 110 bei großen Längen herstellungstechnisch problematisch sein. Bei einem einstückigen Körper mit konstantem Durchmesser kann zum Beispiel ein Walzen eines Gewindes bis zu einer Länge des Befestigungselements 100 von 400 mm möglich sein. Gemäß einem exemplarischen Ausführungsbeispiel kann Abschnitt 112 zum Beispiel bis zu einer Länge von mindestens 400 mm gewalzt werden.

Gemäß **Figur 2** weist der Gewindeabschnitt 110 an der Materialschnittstelle 177 einen zentralen Überstand 161 auf. Der andere Abschnitt 112 weist hingegen an der Materialschnittstelle 177 eine korrespondierende (oder invers zu dem Überstand 161 geformte) zentrale Aussparung 163 zum lückenlosen Aufnehmen des Überstands 161 auf. An der Materialschnittstelle 177 wird der Überstand 161 also formschlüssig in die Aussparung 163 eingeführt. Nachfolgend werden der Überstand 161 und die die Aussparung 163 begrenzende Wandung stoffschlüssig und dauerhaft miteinander verbunden, insbesondere mittels Schweißens oder Klebens. Somit ist bei dem Ausführungsbeispiel gemäß Figur 2 der Gewindeabschnitt 110 rückseitig mit Überstand 161 versehen, der in die vorderseitige invers geformte Aussparung des anderen Abschnitts 112 formschlüssig eingeführt ist.

Ferner ist gemäß Figur 2 der andere Abschnitt 112 als gewindefreier Bolzenabschnitt gebildet, der eine glatte zylindrische Mantelfläche hat. Das Ausführungsbeispiel gemäß Figur 2 unterscheidet sich von dem Ausführungsbeispiel gemäß Figur 1 also darin, dass der andere Abschnitt 112 gemäß Figur 2 nicht als weiterer Gewindeabschnitt ausgebildet ist, sondern stattdessen als glatter bolzenfreier zylindrischer Abschnitt.

Das Ausführungsbeispiel gemäß **Figur 3** unterscheidet sich von dem Ausführungsbeispiel gemäß Figur 2 darin, dass gemäß Figur 3 wiederum der andere Abschnitt 112 als weiterer Gewindeabschnitt mit einem weiteren Gewinde 123 ausgebildet ist. Außerdem ist gemäß Figur 3, anders als gemäß Figur 2, der Überstand 161 am vorderseitigen Ende des anderen Abschnitts 112 gebildet und ist die invers geformte Aussparung 163 am hinteren Ende des Gewindeabschnitts 110 gebildet. Wiederum kann die Verbindung an der Materialschnittstelle 177 mittels Klebens, Schweißens, Lötens, etc. befestigt werden.

Das Ausführungsbeispiel gemäß **Figur 4** unterscheidet sich von dem Ausführungsbeispiel gemäß Figur 2 dadurch, dass nicht am hinterseitigen Ende des Gewindeabschnitts 110 ein Überstand 161 mit radial verringertem Durchmesser gebildet ist, sondern das unverjüngte Ende des Gewindeabschnitts 110 in eine invers geformte Aussparung 163 am vorderseitigen Ende des anderen Abschnitts 112 eingeführt und dort unabtrennbar befestigt ist.

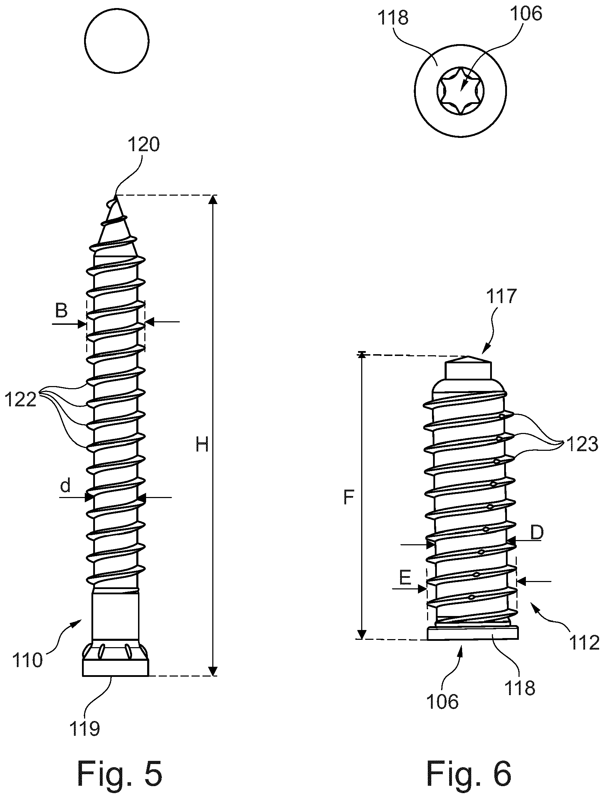

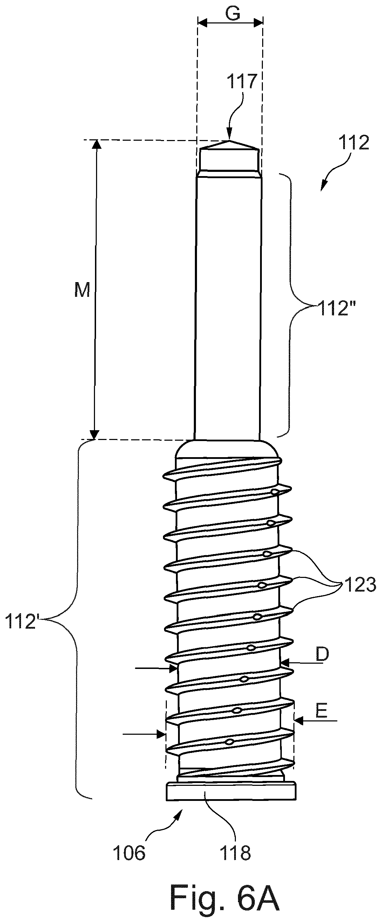

**Figur 5** und **Figur 6** zeigen noch getrennte bzw. separat prozessierte Abschnitte 110, 112 eines Schafts 108 als Basis zum Herstellen eines Befestigungselements 100 gemäß einem exemplarischen Ausführungsbeispiel der Erfindung. Der separate Gewindeabschnitt 110 ist in Figur 5 gezeigt, der als anderer Gewindeabschnitt ausgebildete andere Abschnitt 112 ist als noch separater Körper in Figur 6 gezeigt.

Der andere Abschnitt 112 weist an einem Ende zum Bilden der Materialschnittstelle 177 ein Schmelzdepot 117 aus demselben Material, aus dem auch der Rest des anderen Abschnitts 112 gebildet ist, auf. Das Schmelzdepot 117, das als Zapfen ausgebildet sein kann, kann auf ein Ende des anderen Abschnitts 112 aufgewalzt werden. Das Schmelzdepot 117 ist eingerichtet, beim Anstücken und stoffschlüssigen bzw. einstückigen Fügen des Gewindeabschnitts 110 an den anderen Abschnitt 112 selektiv aufzuschmelzen und sich nachfolgend unter Bildung der Materialschnittstelle 177 wieder zu verfestigen. Die Materialschnittstelle 177 bildet sich dann durch eine Verbindung einer Verbindungsfläche 119 des Gewindeabschnitts 110 mit dem Schmelzdepot 117 des anderen Abschnitts 112. Alternativ oder ergänzend kann ein Schmelzdepot 117 auch an dem Gewindeabschnitt 110 vorgesehen werden. Gemäß einem Ausführungsbeispiel kann das Schmelzdepot 117 aus dem gleichen Material wie der Rest des oder der Rohlinge bestehen. Anders ausgedrückt kann das Schmelzdepot 117 integral und einstoffig mit dem Rest von Abschnitt 112 gebildet werden.

Figur 5 zeigt also den vorderseitigen Gewindeabschnitt 110, der aus einem Rohling oder Draht eines konstanten Außendurchmessers gefertigt wurde. Auf diesen Rohling oder Draht wurde bereits ein Gewinde 122 aufgewalzt.

Ein in Figur 5 dargestellter Kerndurchmesser, siehe d, kann zum Beispiel in einem Bereich zwischen 4 mm und 8 mm liegen, insbesondere in einem Bereich zwischen 4,5 mm und 6,5 mm. Ein Gewindeaußendurchmesser B kann zum Beispiel in einem Bereich zwischen 5 mm und 10 mm liegen, insbesondere in einem Bereich zwischen 6 mm und 8 mm. Eine axiale Länge H des Gewindeabschnitts 110 samt Spitze 120 kann zum Beispiel in einem Bereich zwischen 60 mm und 500 mm liegen, insbesondere in einem Bereich zwischen 80 mm und 400 mm.

Figur 6 zeigt den anderen Abschnitt 112, der ebenfalls aus einem Draht oder Rohling eines konstanten, aber anderen Durchmessers mit endseitig angebrachtem Schmelzdepot 117 hergestellt wurde und mittels Walzens ausgebildet wurde. Indem die Abschnitte 110, 112 gemäß Figur 5 und Figur 6 getrennt voneinander gewalzt wurden, um das jeweilige Gewinde 122, 123 auszubilden, ist ein kompliziertes abschnittsweises Stauchen bzw. Walzen eines einzigen langen Rohlings mit zwei unterschiedlichen zylindrischen Durchmessern entbehrlich. Insbesondere ist ein Umformen des dünnen Gewindeabschnitts 110 aus einem dicken Draht (siehe anderer Abschnitt 112) auf eine große Länge von zum Beispiel 60 mm bis 500 mm entbehrlich. Figur 6 ist ferner zu entnehmen, dass auf einem zylindrischen Überstand ein kegelförmiger Spitzkörper aus einem thermisch aufschmelzbaren Material vorgesehen ist, der das Schmelzdepot 117 bildet. Indem man die Spitze erhitzt, schmilzt oder verflüssigt sich ausschließlich diese Spitze, so dass nach Andrücken des hinteren Endes des Gewindeabschnitts 110 (siehe Bezugszeichen 119) an die aufgeschmolzene Spitze und durch nachfolgende Abkühlung ein einstückiges Befestigungselement 100 gemäß einem exemplarischen Ausführungsbeispiel der Erfindung gebildet wird.

Ein in Figur 6 dargestellter Kerndurchmesser, siehe D, kann zum Beispiel in einem Bereich zwischen 7 mm und 11 mm liegen, insbesondere in einem Bereich zwischen 8,5 mm und 9,5 mm. Ein Gewindeaußendurchmesser E kann zum Beispiel in einem Bereich zwischen 10 mm und 14 mm liegen, insbesondere in einem Bereich zwischen 11 mm und 13 mm. Eine axiale Länge F des anderen Abschnitts 112 samt Schmelzdepot 117 kann zum Beispiel in einem Bereich zwischen 40 mm und 90 mm liegen, insbesondere in einem Bereich zwischen 50 mm und 70 mm.

Bei einem in Figur 6A dargestellten anderen Abschnitt 112 handelt es sich um eine Alternative zu dem in Figur 6 gezeigten anderen Abschnitt 112. Der in Figur 6A gezeigte andere Abschnitt 112 kann mit dem Gewindeabschnitt 110 gemäß Figur 5 an dem Schmelzdepot 117 einstückig verbunden werden. Das Ausführungsbeispiel von Figur 6A unterscheidet sich von jenem gemäß Figur 6 insbesondere dadurch, dass gemäß Figur 6A der andere Abschnitt 112 einen dem Antrieb 106 zugewandten ersten Teilabschnitt 112' und einen dem Schmelzdepot 117 bzw. der späteren Materialschnittstelle 177 zugewandten zweiten Teilabschnitt 112" aufweist. Wie in Figur 6A dargestellt, weisen die beiden Teilabschnitte 112', 112" unterschiedliche Schaftdurchmesser D bzw. G auf. Gemäß Figur 6A weist der erste Teilabschnitt 112' einen Schaftdurchmesser D auf, der größer als ein Schaftdurchmesser G des zweiten Teilabschnitts 112" ist. Ferner weist in dem dargestellten Ausführungsbeispiel der erste Teilabschnitt 112' ein anderes Gewinde 123 auf, das auf den Kern des ersten Teilabschnitts 112' aufgewalzt werden kann. Dagegen ist gemäß Figur 6A der zweite Teilabschnitt 112" gewindefrei ausgebildet und an seiner Mantelfläche glatt. Mit dem Schaffen eines im Vergleich zu Figur 6 zusätzlichen zweiten Teilabschnitts 112" an dem anderen Abschnitt 112 kann nach einem Verbinden des Gewindeabschnitts 110 gemäß Figur 5 mit dem anderen Abschnitt 112 gemäß Figur 6A ein Befestigungselement 100 gemäß einem exemplarischen Ausführungsbeispiel der Erfindung erhalten werden, der in Form des zweiten Teilabschnitts 112" einen Zwischenbereich (oder allgemeiner einen dritten Bereich) entlang der axialen Erstreckung des Schafts 108 aufweist. Dadurch können die Eigenschaften des Befestigungselements 100 in Bezug auf eine bestimmte Applikation noch präziser eingestellt werden - insbesondere kann eine Scheranfälligkeit des Befestigungselements 100 reduziert werden.

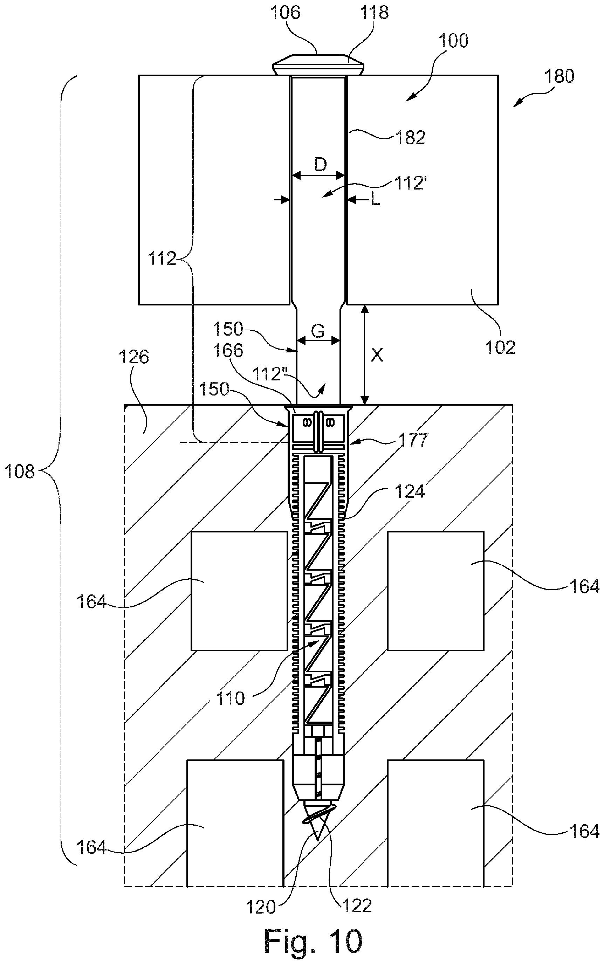

Der zweite Teilabschnitt 112" weist also einen Schaftdurchmesser G auf, der kleiner als der Schaftdurchmesser D des ersten Teilabschnitts 112' ist.
Gleichzeitig ist der Schaftdurchmesser G aber auch größer als der Schaftdurchmesser d des Gewindeabschnitts 110. Sind die in Figur 5 und Figur 6A dargestellten Körper an dem Schmelzdepot 117 aneinander gestückt, wird ein Befestigungselement 100 gemäß einem exemplarischen Ausführungsbeispiel der Erfindung erhalten, bei dem sich der Schaft 108 in zwei Stufen hin zur Spitze 120 verjüngt. Ein solches Befestigungselement 100 hat, bei Einbringen in einen aus Stein bestehenden Verankerungsgrund 126 (vergleiche Figur 10) oder in einen aus Holz bestehenden Verankerungsgrund 104 (vergleiche Figur 8), deutlich verbesserte Schereigenschaften.

**Figur 7** zeigt eine Montageanordnung 180, in der ein Montagekit 150 gemäß einem exemplarischen Ausführungsbeispiel der Erfindung aus einem Befestigungselement 100 und einem Dübel 124 verwendet werden kann, um einen Fensterrahmen als Anbauteil 102 an einer Wand als Verankerungsuntergrund 126 aus Hohlblocksteinen sicher zu verankern. Das Befestigungselement 100 gemäß Figur 7 ist aus dem Konstituenten gemäß Figur 5 und Figur 6A zusammengesetzt.

Wie in Figur 7 gezeigt, sind in dem Verankerungsuntergrund 126 aus Hohlblocksteinen größere Hohlräume 164 gebildet. In einem Betriebszustand, in dem das Befestigungselement 100 ohne den Dübel 124 verwendet würde, könnte über größere Abschnitte des Befestigungselements 100 hinweg keine ausreichend sichere Befestigung in dem Verankerungsuntergrund 126 garantiert werden, da das Befestigungselement 100 abschnittsweise in die Hohlräume 164 greifen würde. Aus diesem Grund wird bei dem in Figur 7 gezeigten Szenario eine Bohrung durch das als Rahmen ausgebildete Anbauteil 102 in dem Verankerungsuntergrund 126 erstellt und dann der Dübel 124 durch das gebohrte Anbauteil 102 in den Verankerungsuntergrund 126 eingesetzt. Ferner wird in dem Anbauteil 102 ein Durchgangsloch gebohrt. Das Befestigungselement 100 wird dann in die Bohrung in dem Verankerungsuntergrund 126 durch das Durchgangsloch in dem Anbauteil 102 eingedreht. Dadurch wird das Befestigungselement 100 einerseits in dem Dübel 124 befestigt. Andererseits führt das Eindrehen zu einem Selbstschneiden eines Gewindes in dem Anbauteil 102. Die Spreizwirkung des Dübels 124 und dessen größere Auflagefläche verbessert den Halt in dem Verankerungsuntergrund 126.

In einem in **Figur 8** gezeigten anderen Betriebszustand, in dem der Verankerungsuntergrund 104 keine Hohlräume 164 aufweist, sondern zum Beispiel als Vollbetonwand oder Vollsteinwand ausgeführt ist, kann dagegen das Befestigungselement 100 gemäß Figur 7 (zusammengesetzt aus den Konstituenten gemäß Figur 5 und Figur 6A) sowohl in dem Anbauteil 102 als auch in dem Verankerungsuntergrund 104 als selbstschneidende Schraube eingesetzt werden. Die Verwendung des Dübels 124 ist in diesem Betriebszustand entbehrlich, da die Haltekraft des Befestigungselements 100 in dem Verankerungsuntergrund 104 hier ausreicht.

Das Befestigungselement 100 und der Dübel 124 erlauben ein beabstandetes Montieren des Anbauteils 102 an dem Verankerungsuntergrund 104, das heißt eine derartige Montage, dass das an dem Verankerungsuntergrund 104 befestigte Anbauteil 102 in einem festen Abstand von dem Verankerungsuntergrund 104 entfernt bleibt.

Mit Vorteil reicht, wie in Figur 8 am besten zu erkennen ist, der zweite Teilabschnitt 112', der auch als gewindefreier Zwischenabschnitt bezeichnet werden kann und einen Schaftdurchmesser G kleiner als ein Schaftdurchmesser D und größer als ein Schaftdurchmesser d hat, entlang einer axialen Länge K in den Verankerungsuntergrund 104 hinein. Dies ist in entsprechender Weise auch in Figur 7 der Fall (dort aufgrund des Dübels 124 nicht zu erkennen). Wirken auf das Befestigungselement 100 gemäß Figur 7 und Figur 8 Scherkräfte ein (zum Beispiel durch ein seitliches Bewegen des Anbauteils 102), so kann der in radialer Richtung relativ große Abschnitt des Befestigungselements 100 im Bereich der axialen Länge K einen besonders zuverlässigen Schutz des Befestigungselements 100 vor einem unerwünschten Abscheren bewirken. Anschaulich kann das Befestigungselement 100 Scherkräfte dann besser aufnehmen. Mit Vorteil kann der Wert K so gewählt werden (bzw. kann das Befestigungselement 100 so tief in den aus Stein ausgebildeten Verankerungsuntergrund 126 eingebracht werden), dass der Wert K mindestens dem halben Kerndurchmesser G des zweiten Teilabschnitts 112" entspricht.

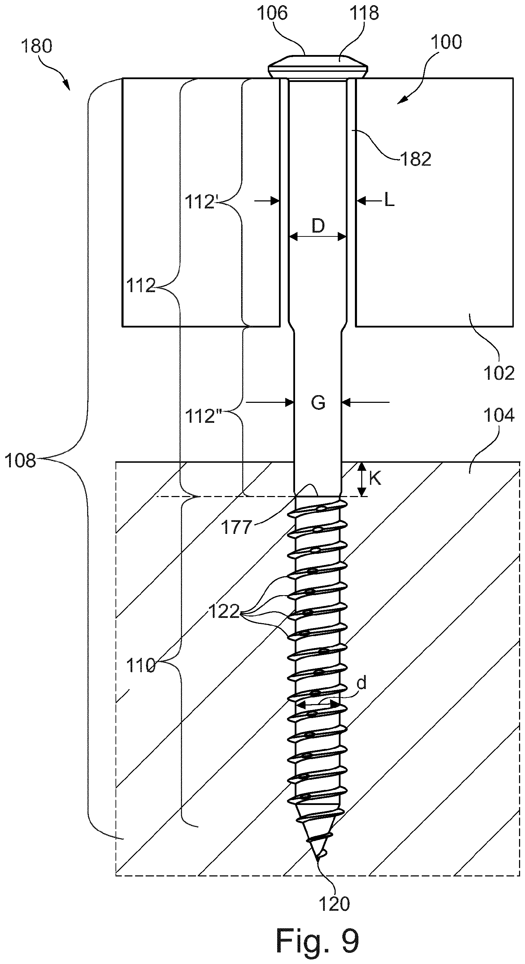

**Figur 9** und **Figur 10** zeigen Komponenten einer Montageanordnung 180, in der ein Montagekit 150 gemäß einem anderen exemplarischen Ausführungsbeispiel der Erfindung aus einem Befestigungselement 100 und einem Dübel 124 verwendet werden kann, um einen Holz-Fensterrahmen als Anbauteil 102 an einer Wand als Verankerungsuntergrund 104 aus Vollstein (Figur 9) oder als Verankerungsuntergrund 126 aus Hohlblocksteinen (Figur 10) sicher zu verankern.

Das als Hybridstruktur aus Schraube und Bolzen gebildete Befestigungselement 100 gemäß Figur 9 dient zum Montieren des Anbauteils 102 an dem Verankerungsgrund 104 (bzw. 126). Das Befestigungselement 100 weist einen in Figur 9 nur schematisch dargestellten und zum Beispiel als Kreuzschlitz ausgebildeten Antrieb 106 zum Drehantreiben des Befestigungselements 100 auf, um dieses durch das Anbauteil 102 hindurch in den Verankerungsgrund 104 einzudrehen. Gemäß Figur 9 ist der Antrieb 106 in einem Kopf 118 ausgebildet. Der Schaft 108 des Befestigungselements 100 ist mit einem endseitigen bzw. spitzenseitigen Gewindeabschnitt 110 versehen, der zum Schraubbefestigen in dem Verankerungsgrund 104 in einem dem Antrieb 106 abgewandten Bereich des Schafts 108 angeordnet ist. Der Gewindeabschnitt 110 ist mit einem ersten Schaftdurchmesser d als Kerndurchmesser mit einem darauf angeordneten helikalen Gewinde 122 ausgebildet. Die Gewindegänge des Gewindes 122 stehen beidseitig über den Kerndurchmesser bzw. den ersten Schaftdurchmesser d des Gewindeabschnitts 110 über.

Darüber hinaus weist der Schaft 108 des Befestigungselements 100 einen mit dem Gewindeabschnitt 110 an einer Materialschnittstelle 177 verbundenen, antriebsseitigen und gewindefreien kreiszylindrischen Bolzenabschnitt als anderen Abschnitt 112 (mit zwei Teilabschnitten 112', 112" mit unterschiedlichen Kerndurchmessern D, G) auf, der zum spielbehafteten Befestigen in dem Anbauteil 102 vorgesehen und in einem dem Antrieb 106 zugewandten Bereich des Schafts 108 angeordnet ist. Der andere Abschnitt 112 weist eine durchgehend profilfreie und durchgehend glatte Mantelfläche auf. Der andere Abschnitt 112 ist mit einem zweiten Schaftdurchmesser D ausgebildet, der größer als der erste Schaftdurchmesser d ist, und ist mit einem dritten Schaftdurchmesser G ausgebildet, der kleiner als D und größer als d ist.

Der Schaft 108 endet in axialer Richtung in einer punktförmigen Endspitze 120, die dem Antrieb 106 gegenüberliegt. In dem gezeigten Ausführungsbeispiel erstreckt sich der Gewindeabschnitt 110 ausgehend von der Endspitze 120, was das Setzen vereinfacht und ein Selbstfurchen eines Gewindegangs in einem Verankerungsgrund 104, 126 begünstigt.

Das in Figur 9 gezeigte Befestigungselement 100 kann zum Beispiel aus Stahl hergestellt sein. Es ist möglich, das Befestigungselement 100 zumindest abschnittsweise, insbesondere im Bereich des Gewindeabschnitts 110, zu härten. Das Gewinde 122 kann als selbstschneidendes bzw. selbstfurchendes Gewinde ausgebildet sein. Das Befestigungselement gemäß Figur 9 kann wahlweise mit oder ohne Dübel 124 eingesetzt werden.

Figur 9 zeigt das Befestigungselement 100 in einem in einem Anbauteil 102 und einem als Vollkörper ausgebildeten Verankerungsgrund 104 dübelfrei montierten Zustand. Figur 10 dagegen zeigt das Befestigungselement 100 gemäß Figur 9 in einem in dem Anbauteil 102 und einem als Hohlkörper ausgebildeten Verankerungsgrund 126 samt Dübel 124 montierten Zustand.

Um zu entscheiden, ob in einem bestimmten Anwendungsfall die Montage gemäß Figur 9 oder jene gemäß Figur 10 angewendet werden soll, kann zunächst ermittelt werden, ob der Verankerungsgrund 104 bzw. 126 ein Vollkörper (wie im Fall von Bezugszeichen 104 in Figur 9) oder ein Hohlkörper (wie im Fall von Bezugszeichen 126 in Figur 10) ist. Falls der Verankerungsgrund 104, 126 ein Vollkörper (vergleiche Bezugszeichen 104 in Figur 9) ist, kann vorzugsweise ein dübelfreies Eindrehen des Befestigungselements 100 durch das Anbauteil 102 hindurch in eine Bohrung (oder vorbohrungsfrei) in dem als Vollkörper ausgestalteten Verankerungsgrund 104 erfolgen. Falls dagegen der Verankerungsgrund 104, 126 ein Hohlkörper (vergleiche Bezugszeichen 126 in Figur 10) ist, erfolgt stattdessen vorzugsweise ein Eindrehen des Befestigungselements 100 durch das Anbauteil 102 hindurch in Dübel 124 in einer Bohrung (oder vorbohrungsfrei) in dem als Hohlkörper ausgestalteten Verankerungsgrund 126. Dadurch kann in beiden Konstellationen eine stabile Befestigung in dem jeweiligen Verankerungsgrund 104, 126 sichergestellt werden, was insbesondere bei der Loslagerbefestigung in dem Anbauteil 102 vorteilhaft ist.

Das Einbringen des Befestigungselements 100 in den Verankerungsgrund 104, 126 kann wahlweise vorbohrungsfrei oder nach Bilden einer Vorbohrung in dem Verankerungsgrund 104, 126 erfolgen. Das Einbringen des Befestigungselements 100 in das Anbauteil 102 erfolgt vorzugsweise nach Bilden einer Vorbohrung (siehe Bohrung 182 mit Durchmesser L>D) in dem Anbauteil 102.

Wenn, wie in Figur 9 gezeigt, der Verankerungsgrund 104 als Vollkörper ausgebildet ist, kann das Befestigungselement 100 dübelfrei montiert werden. Es wird dann in dem Verankerungsgrund 104 montiert. Der Vollkörper, der gemäß diesem Ausführungsbeispiel den Verankerungsgrund 104 bildet, kann dann allein für eine ausreichende Befestigungskraft zwischen Gewindeabschnitt 110 und Verankerungsgrund 104 sorgen.

Gemäß Figur 10 wird das Montagekit 150 aus Befestigungselement 100 und Dübel 124 zum Montieren des Anbauteils 102 an dem Verankerungsgrund 126 eingesetzt. Der in Figur 10 gezeigte Verankerungsgrund 126 weist makroskopische Hohlräume 164 auf, die die Tragkraft des Befestigungselements 100 in dem Verankerungsgrund 126 schwächen. Bei einer solchen Ausgestaltung kann daher zum Erhöhen der Tragkraft zusätzlich der Dübel 124 zum Einsatz kommen, der vor der Montage des Befestigungselements 100 in ein vorgebohrtes Loch in dem Verankerungsgrund 126 eingeführt wird, bis ein Dübelkragen 166 an einer Außenfläche des Verankerungsgrunds 126 zum Aufliegen kommt. Das in dem gezeigten Ausführungsbeispiel auf Abstand X zu dem Verankerungsgrund 126 zu montierende Anbauteil 102, das ebenfalls mit einer Vorbohrung in Form von Bohrung 182 versehen ist, wird dann von dem Befestigungselement 100 durchdrungen und unter Drehantrieb in den Dübel 124 in der Vorbohrung des als Hohlkörper ausgebildeten Verankerungsgrunds 126 eingetrieben. Das Zusammenspiel aus Dübel 124, Gewindeabschnitt 110 und Verankerungsgrund 126 sorgt dann für eine ausreichend feste Verankerung des Befestigungselements 100 in dem Verankerungsgrund 126. Gleichzeitig ermöglicht ein enger Ringspalt zwischen dem Bolzenabschnitt oder anderen Abschnitt 112 und der durch die Bohrung 182 begrenzten Wandung des Anbauteils 102 einen Ausgleich von Zwangskräften zwischen Anbauteil 102 und Verankerungsgrund 126 und wirkt daher als Loslager.

Ähnlich wie in Figur 7 und Figur 8 beschrieben, reicht der zweite Teilabschnitt 112" eine axiale Länge K in den Verankerungsuntergrund 104, 126 hinein, um das Scherverhalten des Befestigungselements 100 zu verbessern. Um ein besonders gutes Scherverhalten zu erreichen, sollte der Wert K mindestens der Hälfte des Kerndurchmessers G des zweiten Teilabschnitts 112" sein. Zum Beispiel kann K mindestens 2 mm bis 3 mm betragen.

Alternativ zu der in Figur 9 und Figur 10 dargestellten Ausführungsform ist es auch möglich, den Kopf 118 wegzulassen. Da gemäß Figur 9 und Figur 10 der Außendurchmesser des anderen Abschnitts 112 größer als der Außendurchmesser des Gewindes 122 ist, eignet sich dieses Befestigungselement 100 besonders gut für eine Verwendung mit Dübel (siehe Figur 10).

Aufgrund der in Figur 9 und Figur 10 gezeigten geometrischen Verhältnisse, insbesondere der geometrischen Verhältnisse von Gewindeabschnitt 108 und anderem Abschnitt 112 zueinander, ist sichergestellt, dass das Befestigungselement 100 durch Löcher im Fensterrahmen hindurchpasst und in einen Verankerungsgrund 104, 126 aus Holz, Beton oder Vollstein eingeführt werden kann.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines Befestigungselements (100), wobei das Verfahren aufweist:
Bilden eines Antriebs (106) zum Antreiben, insbesondere zum Drehantreiben, des Befestigungselements (100); und
Bilden eines Schafts (108) mittels
separaten Bildens eines Gewindeabschnitts (110), der zumindest abschnittsweise mit einem ersten Schaftdurchmesser (d) mit einem darauf angeordneten Gewinde (122) vorgesehen ist;
separates Bilden eines anderen Abschnitts (112), der zumindest abschnittsweise mit einem zweiten Schaftdurchmesser (D) vorgesehen ist, der größer als der erste Schaftdurchmesser (d) ist;
wobei einer des Gewindeabschnitts (110) und des anderen Abschnitts (112) mit einem Überstand (161) versehen wird; und
nachfolgendes Anstücken des Gewindeabschnitts (110) an den anderen Abschnitt (112) an einer Materialschnittstelle (177).

2. Verfahren gemäß Anspruch 1,
wobei der Überstand ein Schmelzdepot (117) ist.

3. Verfahren gemäß Anspruch 1 oder 2, wobei das Anstücken ein Verschweißen oder ein Verkleben des Gewindeabschnitts (110) mit dem anderen Abschnitt (112) an der Materialschnittstelle (177) aufweist.

4. Verfahren gemäß einem der Ansprüche 1 bis 3, wobei das Gewinde (122) des Gewindeabschnitts (110) gebildet, insbesondere gewalzt, wird, bevor der Gewindeabschnitt (110) und der andere Abschnitt (112) aneinander angestückt werden.

5. Verfahren gemäß einem der Ansprüche 1 bis 4,
wobei der andere Abschnitt (112) als anderer Gewindeabschnitt gebildet wird, der an dem zweiten Schaftdurchmesser (D) mit einem darauf angeordneten anderen Gewinde (123) versehen wird, wobei vorzugsweise das andere Gewinde (123) des anderen Gewindeabschnitts gebildet, insbesondere gewalzt, wird, bevor der Gewindeabschnitt (110) und der andere Gewindeabschnitt aneinander angestückt werden; oder
wobei der andere Abschnitt (112) als gewindefreier Bolzenabschnitt gebildet wird; oder
wobei der andere Abschnitt (112) einen dem Antrieb (106) zugewandten ersten Teilabschnitt (112') und einen der Materialschnittstelle (177) zugewandten zweiten Teilabschnitt (112") aufweist, die unterschiedliche Schaftdurchmesser (D, G) aufweisen.

6. Verfahren gemäß einem der Ansprüche 1 bis 5, wobei der andere des Gewindeabschnitts (110) und des anderen Abschnitts (112) mit einer zu dem Überstand (161) im Wesentlichen invers geformten Aussparung (163) versehen wird, und zum Verbinden des Gewindeabschnitts (110) mit dem anderen Abschnitt (112) an der Materialschnittstelle (177) der Überstand (161) in die Aussparung (163) eingeführt wird.

7. Verfahren gemäß einem der Ansprüche 2 bis 6, wobei einer des Gewindeabschnitts (110) und des anderen Abschnitts (112) an einem Ende zum Bilden der Materialschnittstelle (177) das Schmelzdepot (117) aufweist, das eingerichtet ist, beim Anstücken des Gewindeabschnitts (110) an den anderen Abschnitt (112) selektiv aufzuschmelzen und sich nachfolgend unter Bildung der Materialschnittstelle (177) wieder zu verfestigen.

8. Verfahren gemäß Anspruch 5,
wobei der erste Teilabschnitt (112') einen Schaftdurchmesser (D) aufweist, der größer als ein Schaftdurchmesser (G) des zweiten Teilabschnitts (112") ist; und/oder
wobei der erste Teilabschnitt (112') ein anderes Gewinde (123) aufweist; und/oder
der zweite Teilabschnitt (112") gewindefrei, insbesondere an seiner Mantelfläche glatt, ist; und/oder
wobei der zweite Teilabschnitt (112") einen Schaftdurchmesser (G) aufweist, der größer als ein Schaftdurchmesser (d) des Gewindeabschnitts (110) ist.

9. Befestigungselement (100) zum Montieren eines Anbauteils (102) an einem Verankerungsgrund (104, 126), wobei das Befestigungselement (100) aufweist:
einen Antrieb (106) zum Antreiben, insbesondere zum Drehantreiben, des Befestigungselements (100); und
einen Schaft (108) mit
einem Gewindeabschnitt (110), der zum Befestigen in dem Verankerungsgrund (104, 126) in einem dem Antrieb (106) abgewandten Bereich des Schafts (108) und zumindest abschnittsweise mit einem ersten Schaftdurchmesser (d) mit einem darauf angeordneten Gewinde (122) vorgesehen ist; und
einem anderen Abschnitt (112), der zum Befestigen in dem Anbauteil (102) in einem dem Antrieb (106) zugewandten Bereich des Schafts (108) und zumindest abschnittsweise mit einem zweiten Schaftdurchmesser (D) vorgesehen ist, der größer als der erste Schaftdurchmesser (d) ist;
wobei der Gewindeabschnitt (110) und der andere Abschnitt (112) aneinander an einer Materialschnittstelle (177) angestückt sind;
wobei einer des Gewindeabschnitts (110) und des anderen Abschnitts (112) an der Materialschnittstelle (177) einen Überstand (161) aufweist.

10. Befestigungselement (100) gemäß Anspruch 9,
wobei der andere des Gewindeabschnitts (110) und des anderen Abschnitts (112) an der Materialschnittstelle (177) eine Aussparung (163) zum Aufnehmen des Überstands (161) aufweist; und/oder
wobei die Materialschnittstelle (177) eine Schweißnaht oder eine Klebstoffschicht ist; und/oder
wobei der Gewindeabschnitt (110) und der andere Abschnitt (112) aus unterschiedlichen Materialien hergestellt sind; und/oder
wobei der Gewindeabschnitt (110) und der andere Abschnitt (112) an der Materialschnittstelle (177) untrennbar aneinander angestückt sind; und/oder
wobei der andere Abschnitt (112) als anderer Gewindeabschnitt gebildet ist, der an dem zweiten Schaftdurchmesser (D) mit einem darauf angeordneten anderen Gewinde (123) versehen ist; und/oder
wobei der andere Abschnitt (112) als gewindefreier Bolzenabschnitt gebildet ist; und/oder
wobei der Gewindeabschnitt (110) an den anderen Abschnitt (112) an der Materialschnittstelle (177) untrennbar angestückt ist; und/oder
wobei zumindest einer des Gewindeabschnitts (110) und des anderen Abschnitts (112) im Wesentlichen entlang seiner gesamten Längserstreckung einen im Wesentlichen konstanten Schaftdurchmesser (D, d) aufweist; und/oder
wobei zumindest einer des Gewindeabschnitts (110) und des anderen Abschnitts (112) zumindest zwei Teilabschnitte (112', 112") mit unterschiedlichen Schaftdurchmessern (D, G) aufweist.

11. Montagekit (150) zum Montieren eines Anbauteils (102) an einem Verankerungsgrund (104, 126), wobei das Montagekit (150) aufweist:
ein Befestigungselement (100) gemäß einem der Ansprüche 9 und 10; und
einen Dübel (124);
wobei das Befestigungselement (100) eingerichtet ist, durch das Anbauteil (102) hindurch in einen als Vollkörper (104) ausgestalteten Verankerungsgrund (104, 126) dübelfrei eingedreht zu werden;
wobei das Befestigungselement (100) eingerichtet ist, durch das Anbauteil (102) hindurch in den Dübel (124) in einer Bohrung in einem als Hohlkörper (126) ausgestalteten Verankerungsgrund (104, 126) eingedreht zu werden.

12. Montageanordnung (180), aufweisend:
ein Befestigungselement (100) gemäß einem der Ansprüche 9 und 10;
ein Anbauteil (102); und
einen Verankerungsgrund (104, 126);
wobei das Befestigungselement (100) eingerichtet ist, durch das Anbauteil (102) hindurch in den Verankerungsgrund (104, 126) eingebracht zu werden, so dass der Gewindeabschnitt (110) zumindest teilweise in dem Verankerungsgrund (104, 126), insbesondere in einem optionalen Dübel (124) in dem Verankerungsgrund (126), befestigt ist und der angestückte Abschnitt (112) zumindest teilweise in dem Anbauteil (102) befestigt ist.

13. Verfahren zum Montieren eines Anbauteils (102) an einem Verankerungsgrund (104, 126), wobei das Verfahren aufweist:
Antreiben, insbesondere Drehantreiben, eines Antriebs (106) eines Befestigungselements (100), das einen Schaft (108) aufweist;
Befestigen zumindest eines Teils eines Gewindeabschnitts (110) als ein dem Antrieb (106) abgewandter Bereich des Schafts (108) zumindest abschnittsweise mit einem ersten Schaftdurchmesser (d) mit einem darauf angeordneten Gewinde (122) in dem Verankerungsgrund (104, 126);
Befestigen zumindest eines Teils eines anderen Abschnitts (112) als ein dem Antrieb (106) zugewandter Bereich des Schafts (108) zumindest abschnittsweise mit einem zweiten Schaftdurchmesser (D) in dem Anbauteil (102), wobei der zweite Schaftdurchmesser (D) größer als der erste Schaftdurchmesser (d) ist;
wobei der Gewindeabschnitt (110) und der andere Abschnitt (112) aneinander an einer Materialschnittstelle (177) angestückt sind;
wobei einer des Gewindeabschnitts (110) und des anderen Abschnitts (112) an der Materialschnittstelle (177) einen Überstand (161) aufweist.

14. Verfahren gemäß Anspruch 13,
Ermitteln, ob der Verankerungsgrund (104, 126) ein Vollkörper (104) oder ein Hohlkörper (126) ist;
falls der Verankerungsgrund (104, 126) ein Vollkörper (104) ist, dübelfreies Eindrehen des Befestigungselements (100) durch das Anbauteil (102) hindurch in den als Vollkörper (104) ausgestalteten Verankerungsgrund (104, 126);
falls der Verankerungsgrund (104, 126) ein Hohlkörper (126) ist, Eindrehen des Befestigungselements (100) durch das Anbauteil (102) hindurch in einen Dübel (124) in einer Bohrung in dem als Hohlkörper (104) ausgestalteten Verankerungsgrund (104, 126);
wobei das Anbauteil (102) insbesondere einen Fensterrahmen und/oder der Verankerungsgrund (104, 126) insbesondere eine Wand aufweist.

15. Verwendung eines Befestigungselements (100) gemäß einem der Ansprüche 9 und 10 zum Befestigen eines Anbauteils (102) an einem Verankerungsgrund (104, 126), insbesondere aus Holz.

## Claims

1. A method for producing a fastening element (100), the method comprising:
forming a drive (106) for driving, in particular for rotationally driving, the fastening element (100); and
forming a shaft (108) by means of
separately forming a thread section (110) which is provided at least in sections with a first shaft diameter (d) with a thread (122) arranged thereon;
separately forming another section (112) which is provided at least in sections with a second shaft diameter (D) which is larger than the first shaft diameter (d);
wherein one of the thread section (110) and the other section (112) is provided with a protrusion (161); and
subsequent attaching the thread section (110) to the other section (112) at a material interface (177).

2. The method according to claim 1, wherein the protrusion is a melt deposit (117).

3. The method according to claim 1 or 2, wherein the attaching comprises welding or gluing the thread section (110) to the other section (112) at the material interface (177).

4. The method according to any one of claims 1 to 3, wherein the thread (122) of the thread section (110) is formed, in particular rolled, before the thread section (110) and the other section (112) are attached to one another.

5. The method according to any one of claims 1 to 4,
wherein the other section (112) is formed as another thread section which is provided on the second shaft diameter (D) with another thread (123) arranged thereon, wherein the other thread (123) of the other thread section is preferably formed, in particular rolled, before the thread section (110) and the other thread section are attached to one another; or
wherein the other section (112) is formed as a thread-free bolt section; or
wherein the other section (112) has a first portion (112') facing the drive (106) and a second portion (112") facing the material interface (177), which have different shaft diameters (D, G).

6. The method according to any one of claims 1 to 5, wherein the other of the thread section (110) and the other section (112) is provided with a recess (163) substantially inversely shaped to the protrusion (161), and the protrusion (161) is introduced into the recess (163) for connecting the thread section (110) with the other section (112) at the material interface (177).

7. The method according to any one of claims 2 to 6, wherein one of the thread section (110) and the other section (112) has the melt deposit (117) at one end for forming the material interface (177), which is adapted to melt selectively when the thread section (110) is attached to the other section (112) and to solidify subsequently again thereby forming the material interface (177).

8. The method according to claim 5,
wherein the first portion (112') has a shaft diameter (D) which is larger than a shaft diameter (G) of the second portion (112"); and/or
wherein the first portion (112') has another thread (123); and/or
the second portion (112") is thread-free, in particular smooth on its lateral surface; and/or
wherein the second portion (112") has a shaft diameter (G) which is larger than a shaft diameter (d) of the thread section (110).

9. A fastening element (100) for mounting an attachment part (102) at an anchoring base (104, 126), the fastening element (100) comprising:
a drive (106) for driving, in particular for rotating, the fastening element (100); and
a shaft (108) having
a thread section (110) provided for fastening in the anchoring base (104, 126) in an area of the shaft (108) facing away from the drive (106) and provided at least in sections with a first shaft diameter (d) with a thread (122) arranged thereon; and
another section (112) provided for fastening in the attachment part (102) in an area of the shaft (108) facing the drive (106) and provided at least in sections with a second shaft diameter (D) which is larger than the first shaft diameter (d);
wherein the thread section (110) and the other section (112) are attached to one another at a material interface (177);
wherein one of the thread section (110) and the other section (112) comprises a protrusion (161) at the material interface (177).

10. The fastening element (100) according to claim 9,
wherein the other of the thread section (110) and the other section (112) at the material interface (177) comprises a recess (163) for receiving the protrusion (161); and/or
wherein the material interface (177) is a weld seam or an adhesive layer; and/or
wherein the thread section (110) and the other section (112) are made from different materials; and/or
wherein the thread section (110) and the other section (112) are inseparably attached to one another at the material interface (177); and/or
wherein the other section (112) is formed as another thread section which is provided on the second shaft diameter (D) with another thread (123) arranged thereon; and/or
wherein the other section (112) is formed as a thread-free bolt section; and/or
wherein the thread section (110) is inseparably attached to the other section (112) at the material interface (177); and/or
wherein at least one of the thread section (110) and the other section (112) has a substantially constant shaft diameter (D, d) substantially along its entire longitudinal extent; and/or
wherein at least one of the thread section (110) and the other section (112) has at least two portions (112', 112") with different shaft diameters (D, G).

11. A mounting kit (150) for mounting an attachment part (102) at an anchoring base (104, 126), the mounting kit (150) comprising:
a fastening element (100) according to any one of claims 9 and 10; and
a dowel (124);
wherein the fastening element (100) is adapted to be screwed without dowels through the attachment part (102) into an anchoring base (104, 126) configured as a solid body (104);
wherein the fastening element (100) is adapted to be screwed through the attachment part (102) into the dowel (124) in a hole in an anchoring base (104, 126) configured as a hollow body (126).

12. A mounting arrangement (180) comprising:
a fastening element (100) according to any one of claims 9 and 10;
an attachment part (102); and
an anchoring base (104, 126);
wherein the fastening element (100) is adapted to be introduced through the attachment part (102) into the anchoring base (104, 126) so that the thread section (110) is at least partially fastened in the anchoring base (104, 126), in particular in an optional dowel (124) in the anchoring base (126), and the attached section (112) is at least partially fastened in the attachment part (102).

13. A method for mounting an attachment part (102) at an anchoring base (104, 126), the method comprising:
driving, in particular rotary driving, a drive (106) of a fastening element (100) having a shaft (108);
fastening at least part of a thread section (110) as a region of the shaft (108) facing away from the drive (106) at least in sections with a first shaft diameter (d) with a thread (122) arranged thereon in the anchoring base (104, 126);
fastening at least part of another section (112) as a region of the shaft (108) facing the drive (106) at least in sections with a second shaft diameter (D) in the attachment part (102), the second shaft diameter (D) being larger than the first shaft diameter (d);
wherein the thread section (110) and the other section (112) are attached to one another at a material interface (177);
wherein one of the thread section (110) and the other section (112) comprises a protrusion (161) at the material interface (177).

14. The method according to claim 13,
determining whether the anchoring base (104, 126) is a solid body (104) or a hollow body (126);
if the anchoring base (104, 126) is a solid body (104), screwing without dowels the fastening element (100) through the attachment part (102) into the anchoring base (104, 126) configured as a solid body (104);
if the anchoring base (104, 126) is a hollow body (126), screwing the fastening element (100) through the attachment part (102) into a dowel (124) in a hole in the anchoring base (104, 126) configured as a hollow body (104);
wherein the attachment part (102) in particular comprises a window frame and/or the anchoring base (104, 126) in particular comprises a wall.

15. Use of a fastening element (100) according to any one of claims 9 and 10 for fastening an attachment part (102) at an anchoring base (104, 126), in particular made of wood.

## Revendications

1. Procédé de fabrication d'un élément de fixation (100), le procédé comprenant :
le fait de former un moyen d'entraînement (106) pour entraîner, en particulier pour entraîner en rotation, l'élément de fixation (100) ; et
le fait de former une tige (108) en
formant séparément une portion filetée (110) qui est pourvue, au moins par endroits, d'un premier diamètre de tige (d) avec un filetage (122) agencé sur elle ;
formant séparément une autre portion (112) qui est pourvue, au moins par endroits, d'un deuxième diamètre de tige (D) qui est plus grand que le premier diamètre de tige (d) ;
l'une parmi la portion filetée (110) et l'autre portion (112) étant pourvue d'une saillie (161) ; et
ensuite, en assemblant la portion filetée (110) à ladite autre portion (112) au niveau d'une interface (177) de matériau.

2. Procédé selon la revendication 1,
dans lequel la saillie est un dépôt (117) de matière fusible.

3. Procédé selon la revendication 1 ou la revendication 2, dans lequel l'assemblage comprend un soudage ou un collage de la portion filetée (110) à ladite autre portion (112) au niveau de l'interface (177) de matériau.

4. Procédé selon l'une des revendications 1 à 3, dans lequel le filetage (122) de la portion filetée (110) est formé, en particulier roulé, avant que la portion filetée (110) et ladite autre portion (112) ne soient assemblées.

5. Procédé selon l'une des revendications 1 à 4,
dans lequel ladite autre portion (112) est formée en tant qu'une autre portion filetée, qui est pourvue, au niveau du deuxième diamètre de tige (D), d'un autre filetage (123) aménagé sur elle, ledit autre filetage (123) de ladite autre portion filetée étant de préférence formé, en particulier roulé, avant que la portion filetée (110) et ladite autre portion filetée soient assemblées ; ou
dans lequel ladite autre portion (112) est formée en tant que partie de tige non filetée ; ou
dans lequel ladite autre portion (112) présente une première partie (112') du côté du moyen d'entraînement (106) et une deuxième partie (112") du côté de l'interface (177) de matériau, qui ont des diamètres de tige (D, G) différents.

6. Le procédé selon l'une des revendications 1 à 5, dans lequel l'autre parmi la portion filetée (110) et ladite autre portion (112) est pourvue d'un évidement (163) de forme sensiblement inverse à la saillie (161), et, pour relier la portion filetée (110) à ladite autre portion (112) au niveau de l'interface (177) de matériau, la saillie (161) est insérée dans l'évidement (163).

7. Procédé selon l'une quelconque des revendications 2 à 6, dans lequel l'une parmi la portion filetée (110) et ladite autre portion (112) présente, à une extrémité pour former l'interface (177) de matériau, le dépôt (117) de matière fusible, qui est adapté pour fondre sélectivement lorsque la portion filetée (110) est assemblée à l'autre portion (112) et pour se solidifier ensuite afin de former l'interface (177) de matériau.

8. Procédé selon la revendication 5,
dans lequel la première partie (112') a un diamètre de tige (D) qui est plus grand qu'un diamètre de tige (G) de la deuxième partie (112") ; et/ou
dans lequel la première partie (112') présente un filetage (123) différent; et/ou
dans lequel la deuxième partie (112") est dépourvue de filetage, en particulier est lisse sur sa surface extérieure ; et/ou
dans lequel la deuxième partie (112") a un diamètre de tige (G) supérieur au diamètre de tige (d) de la portion filetée (110).

9. Élément de fixation (100) pour le montage d'une pièce à monter (102) sur un support d'ancrage (104, 126), l'élément de fixation (100) comprenant :
un moyen d'entraînement (106) pour entraîner, en particulier pour entraîner en rotation, l'élément de fixation (100) ; et
une tige (108) avec
une portion filetée (110) prévue pour être fixée dans le support d'ancrage (104, 126) dans une zone de la tige (108) opposée au moyen d'entraînement (106) et ayant, au moins par endroits, un premier diamètre de tige (d) avec un filetage (122) agencé sur elle ; et
une autre portion (112) qui est prévue pour être fixée à la pièce à monter (102) dans une zone de la tige (108) tournée vers le moyen d'entraînement (106) et ayant, au moins par endroits, un deuxième diamètre de tige (D) qui est plus grand que le premier diamètre de tige (d) ;
la portion filetée (110) et ladite autre portion (112) étant assemblées l'une à l'autre au niveau d'une interface (177) de matériau ;
l'une parmi la portion filetée (110) et ladite autre portion (112) présentant une saillie (161) au niveau de l'interface (177) de matériau.

10. Élément de fixation (100) selon la revendication 9,
dans lequel l'autre parmi la portion filetée (110) et ladite autre portion (112) présente un évidement (163) au niveau de ladite interface (177) de matériau pour recevoir ladite saillie (161) ; et/ou
dans lequel l'interface (177) de matériau est un cordon de soudure ou une couche adhésive ; et/ou
dans lequel la portion filetée (110) et ladite autre portion (112) sont faites de matériaux différents ; et/ou
dans lequel la portion filetée (110) et ladite autre portion (112) sont fixées de manière inséparable l'une à l'autre au niveau de l'interface matérielle (177) ; et/ou
dans lequel ladite autre portion (112) est formée en tant qu'une autre portion filetée, qui est pourvue, sur ledit deuxième diamètre de tige (D), d'un autre filetage (123) aménagé sur elle ; et/ou
dans lequel ladite autre portion (112) est formée en tant que partie de tige dépourvue de filetage ; et/ou
dans lequel la portion filetée (110) est fixée de manière inséparable à ladite autre portion (112) au niveau de l'interface matérielle (177) ; et/ou
dans lequel au moins une parmi la portion filetée (110) et ladite autre portion (112) présente un diamètre de tige (D, d) sensiblement constant sur toute son étendue longitudinale ; et/ou
dans lequel au moins une parmi la portion filetée (110) et ladite autre portion (112) comprend au moins deux parties (112', 112") ayant des diamètres de tige (D, G) différents.

11. Kit de montage (150) pour le montage d'une pièce à monter (102) sur un support d'ancrage (104, 126), le kit de montage (150) comprenant :
un élément de fixation (100) selon l'une des revendications 9 et 10 ; et
une cheville (124) ;
l'élément de fixation (100) étant conçu pour être vissé sans utiliser de cheville à travers la pièce à monter (102) dans un support d'ancrage (104, 126) conçu comme un corps plein (104) ;
l'élément de fixation (100) étant conçu pour être vissé à travers la pièce rapportée (102) dans la cheville (124) dans un alésage d'un support d'ancrage (104, 126) conçu comme un corps creux (126).

12. Dispositif de montage (180), comprenant :
un élément de fixation (100) selon l'une des revendications 9 et 10 ;
une pièce à monter (102) ; et
un support d'ancrage (104, 126) ;
l'élément de fixation (100) étant conçu pour être inséré à travers la pièce à monter (102) dans le support d'ancrage (104, 126) de sorte que la portion filetée (110) est au moins partiellement fixée dans le support d'ancrage (104, 126), en particulier dans une cheville (124) optionnelle placée dans le support d'ancrage (126), et la partie assemblée (112) est au moins partiellement fixée dans la pièce à monter (102).

13. Procédé de montage d'une pièce à monter (102) sur un support d'ancrage (104, 126), le procédé comprenant :
le fait d'entraîner, en particulier d'entraîner en rotation, un moyen d'entraînement (106) d'un élément de fixation (100) qui comprend une tige (108) ;
le fait de fixer dans le support d'ancrage (104, 126) au moins une partie d'une portion filetée (110) en tant que zone de la tige (108) opposée au moyen d'entraînement (106), ayant, au moins par endroits, un premier diamètre de tige (d) sur lequel est agencé un filetage (122) ;
le fait de fixer dans la pièce à monter (102) au moins une partie d'une autre portion (112) en tant que zone de la tige (108) opposée au moyen d'entraînement (106), ayant, au moins par endroits, un deuxième diamètre de tige (D), le deuxième diamètre de tige (D) étant plus grand que le premier diamètre de tige (d);
la portion filetée (110) et ladite autre portion (112) étant assemblées l'une à l'autre au niveau d'une interface (177) de matériau ;
l'une parmi la portion filetée (110) et ladite autre portion (112) présentant une saillie (161) au niveau de l'interface (177) de matériau.

14. Procédé selon la revendication 13, comprenant :
le fait de déterminer si le support d'ancrage (104, 126) est un corps plein (104) ou un corps creux (126) ;
si le support d'ancrage (104, 126) est un corps plein (104), le fait de visser sans utiliser de cheville l'élément de fixation (100) à travers la pièce à monter (102) jusque dans le support d'ancrage (104, 126) conçu comme un corps plein (104) ;
si le support d'ancrage (104, 126) est un corps creux (126), le fait de visser l'élément de fixation (100) à travers la pièce à monter (102) dans une cheville (124) placée dans un alésage du support d'ancrage (104, 126) conçu comme un corps creux (104) ;
la pièce à monter (102) comprenant notamment un cadre de fenêtre et/ou le support d'ancrage (104, 126) comprenant notamment une paroi.

15. Utilisation d'un élément de fixation (100) selon l'une des revendications 9 et 10 pour fixer une pièce à monter (102) à un support d'ancrage (104, 126), en particulier en bois.
